# EUROPEAN PATENT APPLICATION

(11) **EP 3 073 667 A1**
(43) Date of publication of application: **28.09.2016**
(21) Application number: 14861910.9
(22) Date of filing: 25.08.2014
(51) Int. Cl.: H04L 9/08

(54) **INFORMATION DELIVERY SYSTEM**

(30) Priority: 18.11.2013 JP 2013237782
(71) Applicant: Mitsubishi Electric Corporation, Tokyo 100-8310 (JP)
(72) Inventor: HATTORI, Mitsuhiro, Tokyo 100-8310 (JP); MATSUDA, Nori, Tokyo 100-8310 (JP); KOMIYA, Takashi, Tokyo 108-0023 (JP); KOWATA, Yasuhiro, Tokyo 108-0023 (JP); HAMADA, Tsuyoshi, Tokyo 108-0023 (JP)
(74) Representative: Pfenning, Meinig & Partner mbB
(86) International application number: PCT/JP2014/072095
(87) International publication number: WO 2015/072203

(57) **Abstract**

A user terminal (102) includes a common key storage part which stores a common key to a terminal-side storage unit. A PKG (104) takes as input the common key, encrypts information using the common key inputted, and transmits the information encrypted, as encrypted information to a server (103). The server (103) includes an encrypted information storage part which stores the encrypted information received from the PKG (104), to a server-side storage unit. The server (103) includes an information transmitting part which transmits, upon reception of an information delivery request from the user terminal (102), the encrypted information stored in the server-side storage unit, to the user terminal (102). The user terminal (102) includes a decrypting part which decrypts the encrypted information received, using the common key stored in the terminal-side storage unit, thereby acquiring information.

## Description

### Technical Field

The present invention relates to an information delivery system, a server device, an information generating device, a terminal device, an information delivery method, and a program and, more particularly, to an information delivery system, a server device, an information generating device, a terminal device, an information delivery method, and a program that can deliver information securely.

### Background Art

An encryption scheme called functional encryption attracts attention as a new cryptographic technology in the field of public key encryption. The functional encryption is an encryption scheme having a feature that it can flexibly set conditions for decrypting a ciphertext. The functional encryption includes different types such as ID-based encryption, attribute-based encryption, and inner-product predicate encryption according to their conditions. It is known that a searchable encryption capable of keyword search without decryption can be realized as an application of the functional encryption. Development of such searchable encryption itself has also actively been performed (for example, see Non-Patent Literature 1 and Non-Patent Literature 2).

The functional encryption and the searchable encryption are utilized to realize data management on an untrustworthy server. More specifically, when storing confidential data to an untrustworthy server, the user encrypts the confidential data and stores the encrypted confidential data. This prevents the administrator of the server from seeing the contents of the confidential data.

A user with an authority for ciphertext decryption and keyword search retains a key that matches his or her authority according to a method to be described later. Thus, the user can see the contents of the data by acquiring necessary data from the server and decrypting the data.

In this manner, the main usage of the functional encryption and the searchable encryption is to realize data management on an untrustworthy server.

In order to enable the above usage, in the functional encryption and the searchable encryption which is an application of the functional encryption, keys to be used in encryption are prepared as follows.
(1) First, a trustworthy organization called PKG (Private-Key Generator) generates a key pair of a master public key and a master secret key and stores the key pair. The master public key is made public widely to the entire system because it is a key necessary for encryption. The master secret key is a key used when generating a user secret key (to be described later) and is stored in the PKG securely.
(2) The user with the authority for ciphertext decryption and keyword search accesses the PKG and accepts a user secret key that matches his authority. As the user secret key is secret data having decryption authority and search authority, it need be distributed to the user by the PKG securely and be stored securely.

If the keys are prepared in the above manner, when encryption is to be performed, anybody can perform encryption using the master public key. When decryption and search are to be performed, only the user having the user secret key can perform decryption and search using his own user secret key.

In this manner, in general, the user acquires the user secret key on the premise that he accesses the PKG directly from the user terminal and accepts the user secret key. More specifically, a method has been adopted according to which the user connects to the PKG from the user terminal via a network such as the Internet or private line and accepts the user secret key (for example, Patent Literature 1).

### Citation List

### Patent Literature

Patent Literature 1: JP 5027742

### Non-Patent Literature

Non-Patent Literature 1: Katsuyuki Takashima, Yasuyuki Sakai, Yusuke Naito, Tsutomu Sakagami, Nori Matsuda, Takumi Mori, "Recent Progresses of Functional Encryption Technology for Cloud", Mitsubishi Denki Giho, vol. 86, no. 7, pp. 12-15, July 2012
Non-Patent Literature 2: Dan Boneh, Amit Sahai and Brent Waters, "Functional encryption: Definitions and challenges, "Theory of Cryptography Conference 2011, Lecture Notes in Computer Science, vol. 6597, pp. 253-273, 2011.
Non-Patent Literature 3: Tatsuaki Okamoto and Katsuyuki Takashima, "Fully secure functional encryption with general relations from the decisional linear assumption, "Crypto 2010, Lecture Notes in Computer Science, vol. 6233, pp. 191-208,2010.
Non-Patent Literature 4: Tatsuaki Okamoto and Katsuyuki Takashima, "Adaptively attribute-hiding (hierarchical) inner product encryption, "Eurocrypt 2012, Lecture Notes in Computer Science, vol.7237, pp. 591-608, 2012.

### Summary of Invention

### Technical Problem

In some system, there is a case where the user terminal cannot access the PKG directly and needs to access the PKG via an untrustworthy server. An example is a case where the user terminal is in such an environment that it cannot be connected to a public terminal such as the Internet and is only locally connected to an untrustworthy server. Another example is a case where the connecting destination of the user terminal is limited to an untrustworthy server from the viewpoint of cost and convenience. In these cases, since the user secret key is transmitted via an untrustworthy server, the user secret key need be protected by some measure.

There is a case where the user does not manage the user secret key by himself and the user secret key need be managed on an untrustworthy server. If the user manages the user secret key by himself, for example, the user secret key may be accommodated in an IC card. When this method is actually adopted, however, an IC card issuance cost and a reading terminal purchasing cost are incurred. In addition, the user is required to always carry the IC card with him, influencing the convenience. Hence, sometimes the user secret key as well as the encrypted confidential data are required to be managed on an untrustworthy server.

The present invention has been made to solve the above problems, and provides an information delivery system in which even if the user terminal cannot directly access an information generating device that generates information such as a user secret key, information such as the user secret key can be delivered to the user terminal securely.

### Solution to Problem

An information delivery system includes: an information generating device to generate information; a server device connected to the information generating device; and a terminal device connected to the server device and to communicate with the information generating device via the server device, the information delivery system including
a common key generating part to generate a common key,
wherein the terminal device includes:
a terminal-side storage unit; and
a common key storage part to take as input the common key generated by the common key generating part, and to store the common key inputted, to the terminal-side storage unit,
wherein the information generating device includes:
   an information encrypting part to take as input the common key generated by the common key generating part, to encrypt the information by a processing device using the common key inputted, and to transmit the information encrypted, to the server device as encrypted information, and
   wherein the server device includes:
   a server-side storage unit; and
   an encrypted information storage part to receive the encrypted information from the information encrypting part of the information generating device, and to store the encrypted information received, to the server-side storage unit.

### Advantageous Effects of Invention

In an information delivery system according to the present invention, a terminal device includes a common key storage part which takes as input a common key generated by a common key generating part and stores the inputted common key to a terminal-side storage unit. An information generating device includes an information encrypting part which takes as input the common key generated by the common key generating part, encrypts information using the inputted common key, and transmits the information that is encrypted, to a server device as encrypted information. The server device includes an encrypted information storage part which receives the encrypted information from the information encrypting part of the information generating device and stores the received encrypted information to a server-side storage unit. Therefore, even when the terminal device is not connected to the information generating device, information can be delivered to the terminal device securely via the server device.

### Brief Description of Drawings

Fig. 1 is a diagram illustrating an example of a configuration of an information delivery system 500.
Fig. 2 is a diagram for explaining the types and functions of keys of functional encryption.
Fig. 3 is a diagram for explaining the types and functions of keys of searchable encryption (searchable encryption scheme).
Fig. 4 is a diagram illustrating a block configuration of a PKG 104 according to Embodiment 1.
Fig. 5 is a diagram illustrating a block configuration of a server 103 according to Embodiment 1.
Fig. 6 is a diagram illustrating a block configuration of a user terminal 102 according to Embodiment 1.
Fig. 7 is a diagram illustrating an example of a hardware configuration of the user terminal 102, server 103, and PKG 104 according to Embodiment 1.
Fig. 8 is a flowchart illustrating a procedure of a system setup process in the information delivery system 500 according to Embodiment 1.
Fig. 9 is a flowchart illustrating a procedure of a terminal setup process in the information delivery system 500 according to Embodiment 1.
Fig. 10 is a diagram illustrating an example of configurations of data in databases of the user terminal 102, server 103, and PKG 104, respectively, of the time the system setup process and the user setup process according to Embodiment 1 are ended.
Fig. 11 is a flowchart illustrating a procedure of a process (user secret key delivery process) of delivering a user secret key of the functional encryption to the user terminal according to Embodiment 1.
Fig. 12 is a flowchart illustrating a procedure of a process (master public key delivery process) of delivering a master public key of the functional encryption to the user terminal according to Embodiment 1.
Fig. 13 is a flowchart illustrating a procedure of a system setup process in an information delivery system 500a according to Embodiment 2.
Fig. 14 is a flowchart illustrating a procedure of a user setup process in the information delivery system 500a according to Embodiment 2.
Fig. 15 is a diagram illustrating an example of configurations of data in databases of a user terminal 102, server 103, and PKG 104, respectively, of the time the system setup process and the user setup process according to Embodiment 2 are ended.
Fig. 16 is a flowchart illustrating a procedure of a process (user secret key delivery process) of delivering a user secret key usk of the functional encryption to the user terminal according to Embodiment 2.
Fig. 17 is a flowchart illustrating a procedure of a process (master public key delivery process) of delivering a master public key of the functional encryption to the user terminal according to Embodiment 2.
Fig. 18 is a flowchart illustrating a procedure of a user setup process in an information delivery system 500b according to Embodiment 3.
Fig. 19 is a diagram illustrating an example of configurations of data in databases of a user terminal 102, server 103, and PKG 104, respectively, of the time a system setup process and the user setup process according to Embodiment 3 are ended.
Fig. 20 is a flowchart illustrating a procedure of a process (user secret key delivery process) of delivering a user secret key usk of the functional encryption to the user terminal according to Embodiment 3.

### Description of Embodiments

### Embodiment 1.

Embodiment 1 will describe, as the most secure scheme, an information delivery system 500 (information delivery scheme) in which, in addition to the fact that the server cannot acquire a user secret key, the server cannot spoof the user to counterfeit a master public key and the user secret key at will and send the counterfeit keys to the user.

First, prior to describing the functional configuration of the information delivery system 500 according to this embodiment, the configuration of the information delivery system 500, the functional encryption, and the searchable encryption will be described.

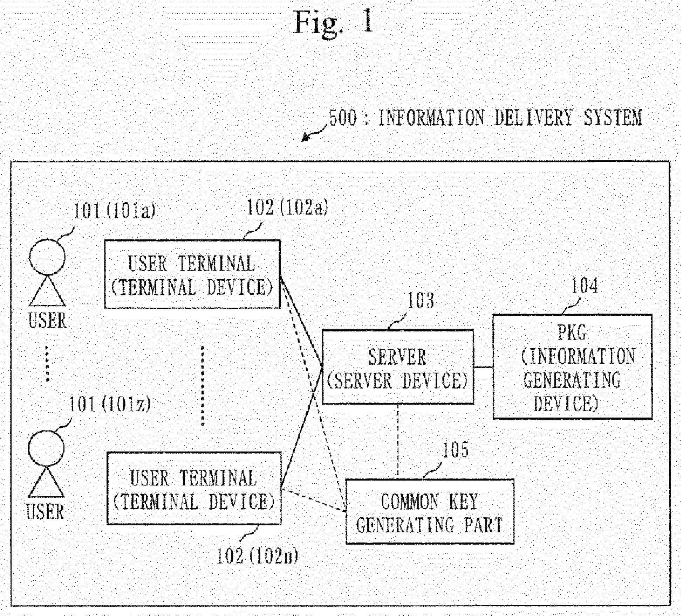

Fig. 1 is a diagram illustrating an example of a configuration of the information delivery system 500 according to Embodiment 1.

As illustrated in Fig. 1, the information delivery system 500 includes: a PKG 104 (information generating device) which generates information such as a public key, a secret key, a master public key, a master secret key, and a user secret key; a server 103 (server device) which is connected to the PKG 104; and a user terminal 102 (terminal device) which is connected to the server 103 and communicates with the PKG 104 via the server 103. The information delivery system 500 may also include a common key generating part 105 which generates a common key. Alternatively, the common key generating part 105 may be provided to the user terminal 102 or to the server 103.

In Fig. 1, a user 101 (users 101a to 101z) is the user of the functional encryption and the searchable encryption. The information delivery system 500 is utilized by at least two users 101. However, the number of users 101 may be one.

The information delivery system 500 includes at least two user terminals 102 (user terminals 102a to 102n). However, the number of user terminals 102 may be one. The user terminals 102a to 102n are information equipment utilized by the user and specifically are a personal computer, a smart phone, a tablet terminal, and the like.

The server 103 stores encrypted data, the user secret key, and the like.

The PKG 104 generates the master public key and the master secret key which are used in the functional encryption and the searchable encryption. The PKG 104 stores the generated master public key and master secret key. The PKG 104 also generates the user secret key.

Referring to Fig. 1, each user terminal 102 is connected to the server 103 via a network such as a LAN (Local Area Network) or the Internet but is not directly connected to the PKG 104.

The PKG 104 is connected to the server 103 via the network such as the LAN or the Internet but is not directly connected to the user terminal 102.

In this manner, the user terminal 102 is connected to the PKG 104 via the server 103. There is a case where the server 103 is, for example, a server that is untrustworthy in terms of security.

Each of the users 101a to 101z utilizes the information delivery system 500 by employing an arbitrary user terminal 102. Hence, a plurality of users 101 may share one user terminal 102, or one user 101 may use a plurality of user terminals 102.

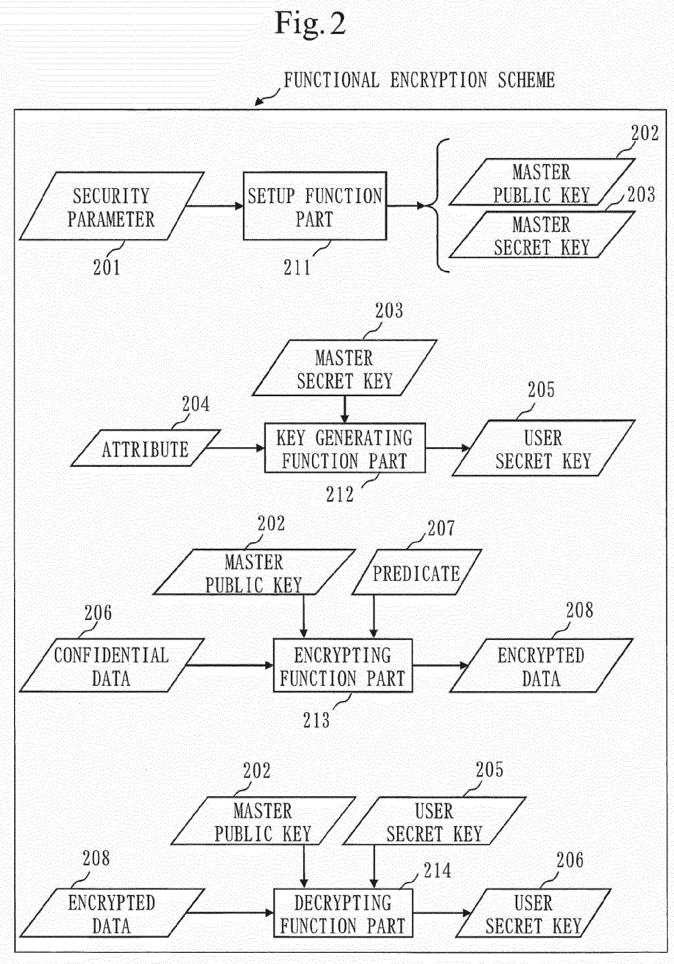

Fig. 2 is a diagram for explaining the types and functions of keys of the functional encryption (functional encryption scheme). The types and functions of the keys of the functional encryption will be explained with reference to Fig. 2.

As illustrated in Fig. 2, the functional encryption includes at least four function parts that are a setup function part 211, a key generating function part 212, an encrypting function part 213, and a decrypting function part 214.

The setup function part 211 is a function part that takes as input a security parameter 201 and outputs a master public key 202 and a master secret key 203. The security parameter 201 expresses the strength of security using a numerical value such as the number of bits. Usually, a value such as 80 bits or 128 bits is utilized as the security parameter 201.

The key generating function part 212 is a function part that takes as input an attribute 204 and the master secret key 203 and outputs a user secret key 205 relating to the attribute 204. The attribute 204 is data indicating the user ID and the features (department, post, and the like) of the user and stipulating the decryption authority of the user secret key 205.

The encrypting function part 213 is a function part that takes as input confidential data 206, the master public key 202, and a predicate 207, and outputs encrypted data 208. The predicate 207 stipulates a condition under which the encrypted data 208 can be decrypted. The predicate 207 is data such as "administrative manager or finance manager".

The decrypting function part 214 is a function part that takes as input the encrypted data 208, master public key 202, and user secret key 205, and outputs the original confidential data 206. If the attribute 204 built in the user secret key 205 does not satisfy the predicate 207 built in the encrypted data 208, decryption will fail. For example, if the attribute 204 is a set of "administrative department", "general staff", and "male" and the predicate 207 is "administrative manager or finance manager", the original confidential data 206 will not be decrypted, and decryption will fail.

The above explanation is made for a case of a ciphertext-policy-type functional encryption, to be strict. With functional encryption of another type such as key-policy-type functional encryption or dual-policy-type functional encryption, the same functional configuration and the same key configuration are obtained by appropriately replacing the terms.

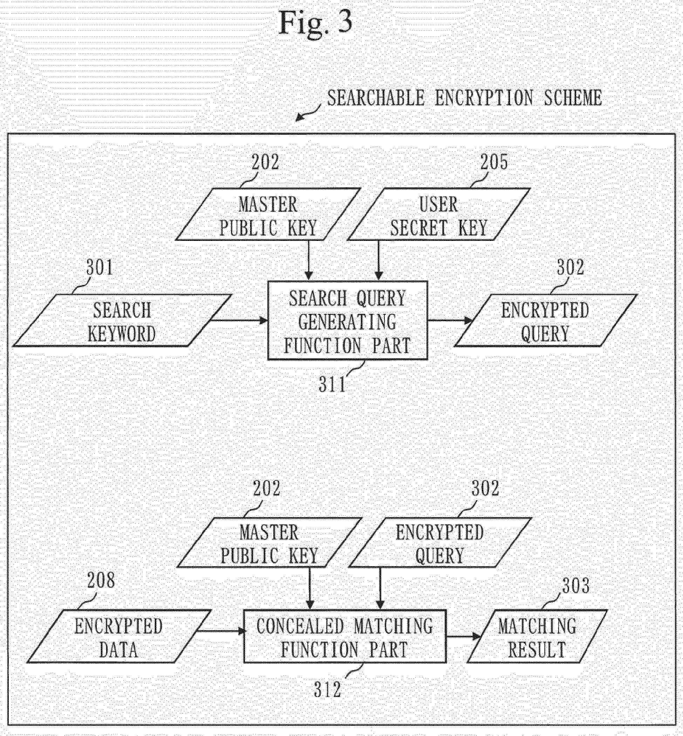

Fig. 3 is a diagram for explaining the types and functions of keys of the searchable encryption (searchable encryption scheme). The types sand functions of the keys of the searchable encryption (searchable encryption scheme) will be explained with reference to part of Fig. 2, and Fig. 3.

The searchable encryption includes a search query generating function part 311 and a concealed matching function part 312 in Fig. 3 in addition to the setup function part 211, key generating function part 212, and encrypting function part 213 of Fig. 2, leading to a total of at least five function parts. The setup function part 211, key generating function part 212, and encrypting function part 213 are common with the functional encryption and their explanation will accordingly be omitted. The function parts of Fig. 3 will be described.

Referring to Fig. 3, the search query generating function part 311 is a function part that takes as input a search keyword 301, the master public key 202, and the user secret key 205, and outputs an encrypted query 302. The search keyword 301 is a keyword included in the confidential data 206 being the search target. For example, the search keyword 301 is a keyword such as "accounting statement" and "accounting section; internal use only".

The concealed matching function part 312 is a function part that takes as input the encrypted data 208, master public key 202, and encrypted query 302, and outputs a matching result 303. The matching result 303 is 1-bit information indicating whether or not the confidential data 206 included in the encrypted data 208 is identical with the search keyword 301 included in the encrypted query 302. For example, if the confidential data 206 and the search keyword 301 are identical, the concealed matching function part 312 outputs "1: hit"; otherwise "0: not hit". In this manner, the searchable encryption allows matching without decrypting the encrypted data 208 and encrypted query 302.

Now the types and functions of the functional encryption and of the searchable encryption have been described. As the information delivery system 500 according to this embodiment can be applied to a general functional encryption and a general searchable encryption, the types and functions of the functional encryption and of searchable encryption will not be discussed in further detail. Regarding specific implementation methods of encryptions, an implementation method of the functional encryption is described in, for example, Non-Patent Literature 3, and an implementation method of the searchable encryption is described in, for example, Non-Patent Literature 4.

So far the system configuration of the information delivery system 500 according to this embodiment, and the functional encryption and searchable encryption have been described.

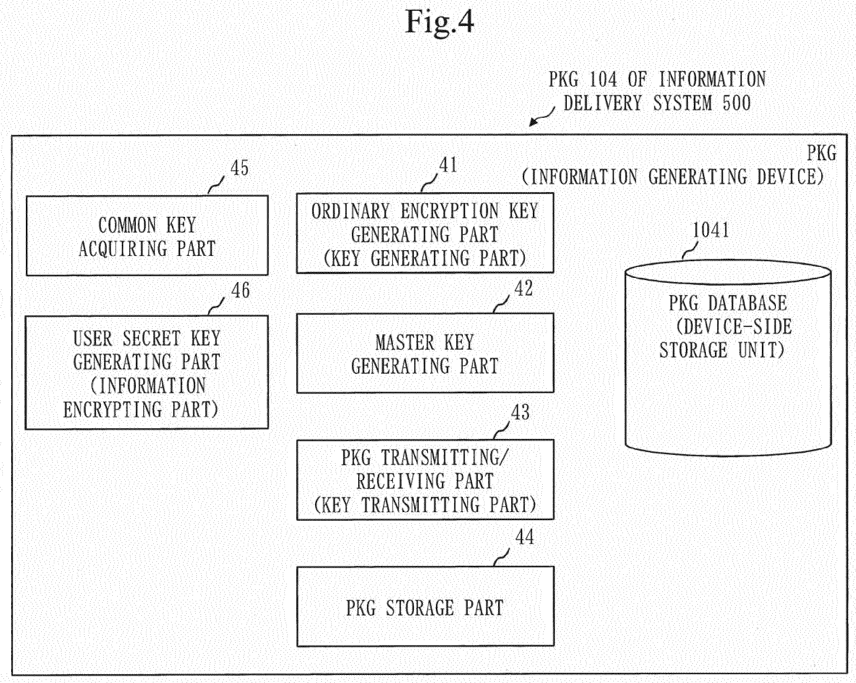

Fig. 4 is a diagram illustrating a block configuration of the PKG 104 according to this embodiment.

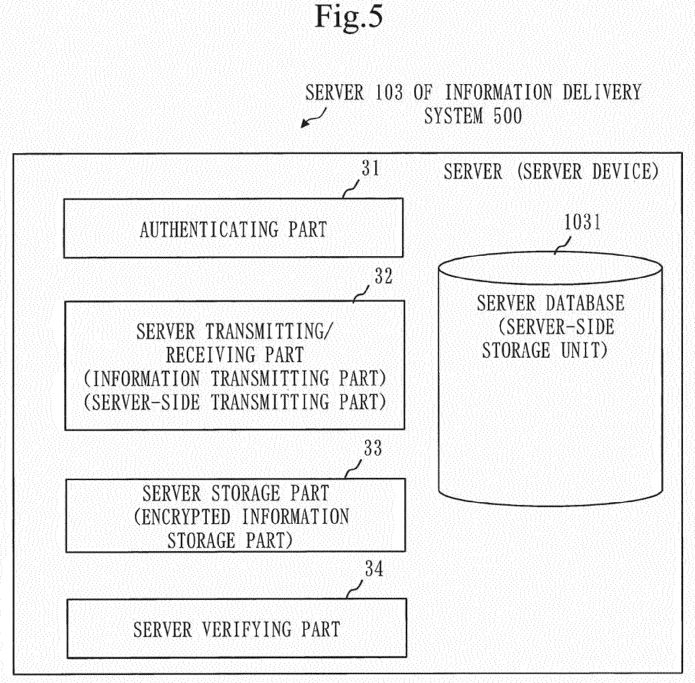

Fig. 5 is a diagram illustrating a block configuration of the server 103 according to this embodiment.

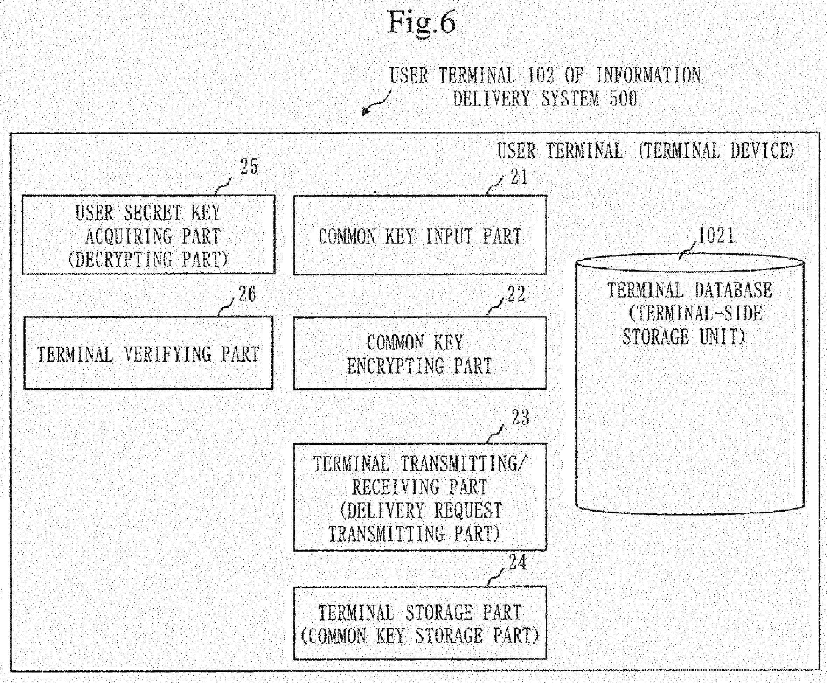

Fig. 6 is a diagram illustrating a block configuration of the user terminal 102 according to this embodiment.

The block configurations of the PKG 104, server 103, and user terminal 102 will be described with reference to Figs. 4 to 5.

As illustrated in Fig. 4, the PKG 104 includes a PKG database 1041, an ordinary encryption key generating part 41, a master key generating part 42, a PKG transmitting/receiving part 43, a PKG storage part 44, a common key acquiring part 45, and a user secret key generating part 46.

The PKG 104 is an example of an information generating device which generates information such as the user secret key, master public key, master secret key, ordinary public key, and ordinary secret key.

The PKG database 1041 is an example of a device-side storage unit which stores the master public key, master secret key, secret key, and the like.

The PKG storage part 44 stores the master public key, master secret key, secret key, and the like to the PKG database 1041.

The ordinary encryption key generating part 41 is an example of a key generating part which generates the public key and the secret key which relates to the public key.

The master key generating part 42 generates the master public key and the master secret key by the functional encryption, the searchable encryption, or the like.

The PKG transmitting/receiving part 43 transmits and receives data in the PKG 104. For example, the PKG transmitting/receiving part 43 is an example of a key transmitting part which transmits the public key generated by the ordinary encryption key generating part 41 to the server 103.

The common key acquiring part 45 receives an encrypted common key encrypted by the public key, via the server 103, and decrypts the encrypted common key received, by the secret key, thus acquiring the common key.

The user secret key generating part 46 is an example of an information encrypting part which takes as input the common key acquired by the common key acquiring part 45, encrypts information such as the user secret key using the common key inputted, and transmits the encrypted information that has been encrypted, to the server 103.

As illustrated in Fig. 5, the server 103 includes a server database 1031, an authenticating part 31, a server transmitting/receiving part 32, a server storage part 33, and a server verifying part 34.

The authenticating part 31 accepts log-in information from the user 101 and carries out an authentication process.

The server database 1031 is an example of a server-side storage unit which stores common data 1032 being common with the information delivery system 500, individual data 1033 specific to the user 101 and user terminal 102, and the like.

The server storage part 33 stores, for example, the common data 1032 and the individual data 1033 to the server database 1031. The server storage part 33 is an example of an encrypted information storage part which receives the encrypted information having been encrypted using the common key, from the PKG 104, and stores the encrypted information received, to the server database 1031.

The server transmitting/receiving part 32 transmits and receives data in the server 103. For example, the server 103 is an example of an information transmitting part which, upon reception of an information delivery request requesting delivery of information such as the user secret key, from the user terminal 102, transmits the encrypted information stored in the server database 1031 by the server storage part 33, to the user terminal 102. The server transmitting/receiving part 32 is an example of a server-side transmitting part which transmits the ordinary public key transmitted from the PKG 104, to the user terminal.

The server verifying part 34 verifies the ordinary public key transmitted from the PKG 104.

As illustrated in Fig. 6, the user terminal 102 includes a terminal database 1021, a common key input part 21, a common key encrypting part 22, a terminal transmitting/receiving part 23, a terminal storage part 24, a user secret key acquiring part 25, and a terminal verifying part 26.

The terminal database 1021 is an example of a terminal-side storage unit which stores a terminal identifier TID, the common key, and the like.

For instance, the terminal storage part 24 is an example of a common key storage part which stores the common key to the terminal database 1021.

The common key input part 21 takes as input the common key from the common key generating part 105 which generates a common key. Alternatively, the common key input part 21 may have a function of generating a common key.

The common key encrypting part 22 receives the public key from the PKG 104 via the server 103, encrypts, using the public key received, the common key stored in the terminal database 1021, and transmits the encrypted common key which has been encrypted.

The terminal transmitting/receiving part 23 transmits and receives data in the user terminal 102. For example, the terminal transmitting/receiving part 23 is an example of a delivery request transmitting part which transmits, via the PKG 104, an information delivery request to the server, requesting delivery of information such as the user secret key.

The user secret key acquiring part 25 is an example of a decrypting part which receives the encrypted information transmitted by the server 103 that has received the information delivery request, and decrypts the encrypted information received, using the common key stored in the terminal database 1021, thereby acquiring information such as the user secret key.

The terminal verifying part 26 verifies the public key transmitted from the PKG 104 via the server 103.

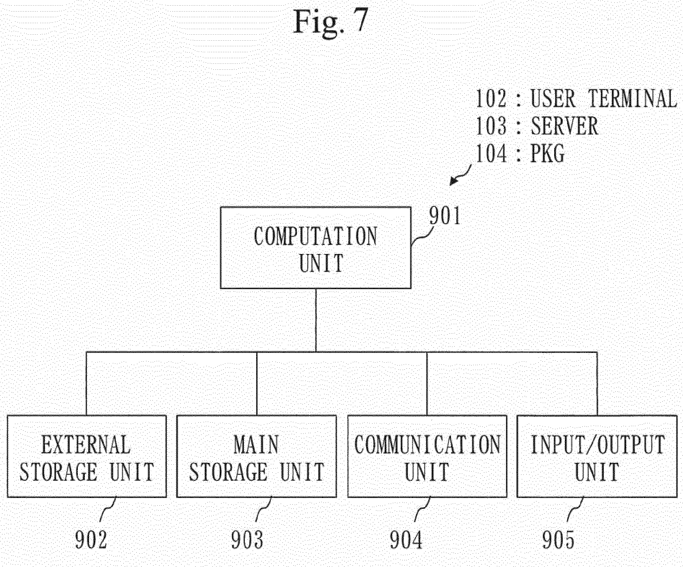

Fig. 7 is a diagram illustrating an example of a hardware configuration of the user terminal 102, server 103, and PKG 104 according to this embodiment.

A hardware configuration example of the user terminal 102, server 103, and PKG 104 will be described with reference to Fig. 7.

Each of the user terminal 102, the server 103, and the PKG 104 includes a computer. The elements of the user terminal 102, the server 103, and the PKG 104 can be implemented by programs.

Regarding the hardware configuration of the user terminal 102, server 103, and PKG 104, a computation unit 901, an external storage unit 902, a main storage unit 903, a communication unit 904, and an input/output unit 905 are connected to a bus.

The computation unit 901 is a CPU (Central Processing Unit) which executes programs.

The external storage unit 902 is, for example, a ROM (Read Only Memory), a flash memory, or a hard disk unit.

The main storage unit 903 is a RAM (Random Access Memory).

The communication unit 904 is, for example, a communication board, and is connected to a LAN (Local Area Network) or the like. The communication unit 904 is not necessarily connected to a LAN but may be connected to a WAN (Wide Area Network) such as an IP-VPN (Internet Protocol Virtual Private Network), a wide-area LAN, or an ATM (Asynchronous Transfer Mode) network; or the Internet. The LAN, the WAN, and the Internet are examples of a network.

The input/output unit 905 is, for example, a mouse, a keyboard, or a display unit. A touch panel, a touch pad, a track ball, a pen tablet, or another pointing device may be used in place of the mouse. The display unit may be an LCD (Liquid Crystal Display), a CRT (Cathode Ray Tube), or another displaying device.

The programs are usually stored in the external storage unit 902. The programs as loaded in the main storage unit 903 are sequentially read and executed by the computation unit 901.

The programs are those that implement the functions each described as "part" illustrated in Figs. 4 to 6.

Furthermore, an operating system (OS) is usually stored in the external storage unit 902 as well. At least part of the OS is loaded to the main storage unit 903. The computation unit 902, while executing the OS, executes the programs that implement the functions of each "part" illustrated in Figs. 4 to 6.

Application programs are also stored in the external storage unit 902. The application programs as loaded in the main storage unit 903 are sequentially executed by the computation unit 901.

Information such as "table" is also stored in the external storage unit 902.

In the description of this embodiment, information, data, signal values, and variable values indicating the results of processes described as "check", "determine", "extract", "detect", "set", "register", "select", "generate", "take as input", "output", and the like are stored, in the form of files, in the main storage unit 903.

The data received by the user terminal 102, server 103, and PKG 104 are stored in the main storage unit 903.

Encryption keys and decryption keys, random number values, and parameters may be stored, in the form of files, in the main storage unit 903.

The configuration of Fig. 7 merely illustrates an example of the hardware configuration of the user terminal 102, server 103, and PKG 104. The hardware configuration of the user terminal 102, server 103, and PKG 104 is not limited to the configuration illustrated in Fig. 7, but another configuration may be employed.

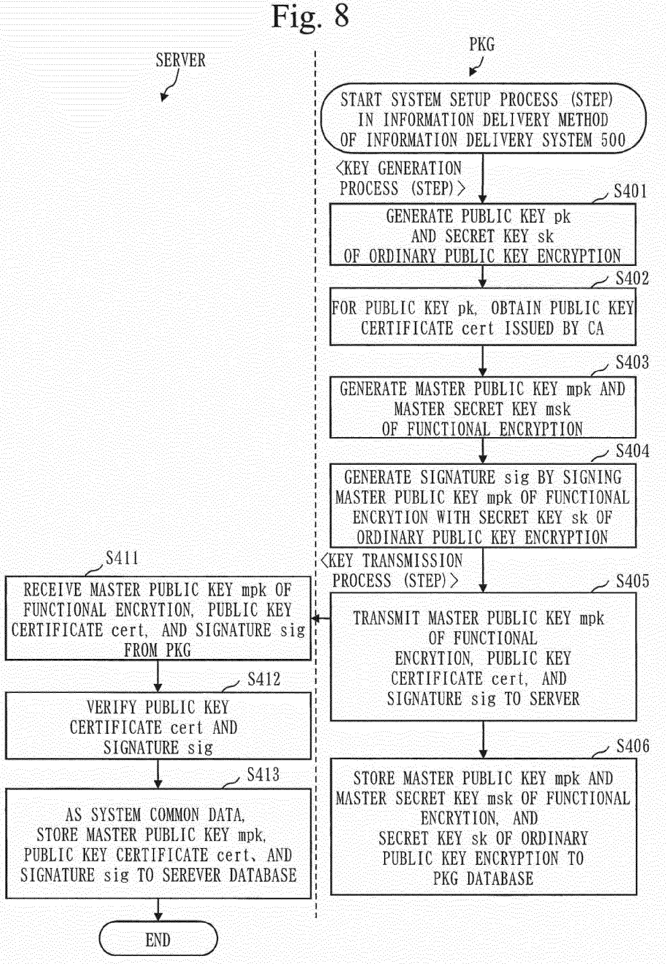

Fig. 8 is a flowchart illustrating a procedure of a system setup process in the information delivery method (information delivery process, information delivery step) of the information delivery system 500 according to this embodiment.

The delivery scheme of the user secret key in the information delivery system 500 can be employed with the functional encryption as well as the searchable encryption. Hence, a delivery scheme of the functional encryption will be described as an example.

The outline of the system setup process will be described. The system setup process is executed in the information delivery system 500 when the system is to be started anew, as in setting up the system for the first time or replacing the existing system totally.

### <PKG-Side System Setup Process: S401 to S406>

First, the process of the PKG 104 will be described with reference to Fig. 8.

In S401, the ordinary encryption key generating part 41 of the PKG 104 generates a public key pk and secret key sk of an ordinary public key encryption (key generation process). The ordinary public key encryption is, for example, RSA encryption or ElGamal encryption.

In S402, for the public key pk generated in S401, the ordinary encryption key generating part 41 obtains a public key certificate cert issued by the CA (Certificate Authority). The CA is an authentication office of the SKI (Public-Key Infrastructure) and plays the role of guaranteeing the user that the public key pk is certainly the public key of the PKG 104.

In S403, the master key generating part 42 of the PKG 104 generates a master public key mpk and master secret key msk of the functional encryption. This is implemented by executing the setup function part 211 described with reference to Fig. 2.

In S404, the master key generating part 42 generates a signature sig by signing the master public key mpk of the functional encryption with the secret key sk of the ordinary public key encryption. Generation of the signature sig is implemented by a digital signature algorithm such as DSA (Digital Signature Algorithm).

In S405, the PKG transmitting/receiving part 43 of the PKG 104 transmits the master public key mpk of the functional encryption, the public key certificate cert, and the signature sig to the server 103 (key transmission process). A secure communication path is desirably established between the server and the PKG. More specifically, it is desirable that if the communication is made on-line, the communication path is encrypted by the SSL (Secure Socket Layer); if the communication is made off-line, data is stored in a medium, and the medium is delivered by a trustworthy transport operator, so that the data is transmitted securely.

Finally, in S406, the PKG storage part 44 of the PKG 104 stores the master public key mpk and master secret key msk of the functional encryption, and the secret key sk of the ordinary public key encryption, to the PKG database 1041. The system setup process of the PKG 104 is now completed.

### <Server-Side System Setup Process: S411 to S413>

The system setup process of the server 103 will now be described.

In S411, the server transmitting/receiving part 32 of the server 103 receives the master public key mpk of the functional encryption, the public key certificate cert, and the signature sig from the PKG 104.

Then, in S412, the server verifying part 34 of the server 103 verifies the public key certificate cert and signature sig. The public key certificate cert can be verified with the public key of the CA, or with cert that is verified. It is thus confirmed that these data have certainly been sent from the PKG 104.

Finally, in S413, the server storage part 33 of the server 103 stores the master public key mpk, public key certificate cert, and signature sig to the server database 1031, as the common data 1032 in the information delivery system 500. The system setup process of the server 103 is now completed.

If it is obvious that the received data (master public key mpk, public key certificate cert, and signature sig) have certainly been sent from the PKG 104, the server 103 may omit S412. For example, if the server 103 and the PKG 104 are connected by the SSL and it is known from the server authentication of the SSL in advance that the connecting destination of the server 103 is the PKG 104, then S412 may be omitted.

The system setup process has now been described.

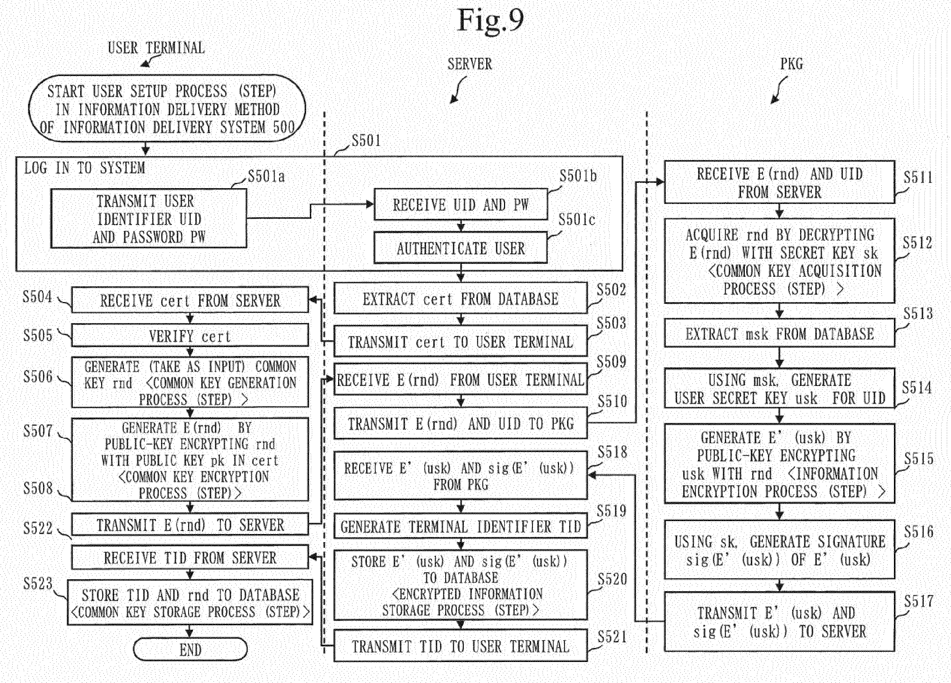

Fig. 9 is a flowchart illustrating a procedure of a user setup process in the information delivery method of the information delivery system 500 according to this embodiment.

The user setup process will be described with reference to Fig. 9.

The outline of the user setup process will be explained. The user setup process is a process that is executed when the combination of the user 101 and user terminal 102 is not registered in the server 103 yet, as in a case where the user 101 starts use of the information delivery system 500 for the first time, or although the user is an existing user 101, he is to start use of a new user terminal 102. The combination of the user 101 and user terminal 102 is registered to the server 103 in this manner so that each user can utilize the system with an arbitrary user terminal 102.

First, in S501, the user 101 logs in to the information delivery system 500 by operating the user terminal 102. More specifically, in S501a, the terminal transmitting/receiving part 23 of the user terminal 102 transmits a user identifier UID and a password PW to the server 103. In S501b, the authenticating part 31 of the server 103 receives the user identifier UID and password PW. In S501c, using the user identifier UID and password PW, the authenticating part 31 authenticates the user 101. A secure communication path is desirably established between the user terminal 102 and the server 103.

UID and PW employed for the log-in process of S501 may be dedicated to the functional encryption, or may be those equipped with a proper data management system that does not have a functional encryption function. The latter case is advantageous in that the user need not manage a plurality of user identifiers and a plurality of passwords.

### <Process of Server 103>

In S502, when the user authentication is completed, the server 103 extracts the public key certificate cert from the server database 1031.

In S503, the server transmitting/receiving part 32 of the server 103 transmits the public key certificate cert extracted, to the user terminal 102.

### <Process of User Terminal 102>

In S504, the terminal transmitting/receiving part 23 of the user terminal 102 receives the public key certificate cert from the server 103.

In S505, the terminal verifying part 26 of the user terminal 102 verifies the public key certificate cert. As described above, the public key certificate cert is issued by the CA. Thus, the user terminal 102 can verify the public key certificate cert if it retains the same. If the verification fails, the process is ended.

If the verification is successful, the process of the user terminal 102 advances to S506.

In S506, the common key input part 21 of the user terminal 102 takes as input a common key rnd from the common key generating part 105. Alternatively, the common key input part 21 itself may have the function (for example, terminal-side common key generating part) of the common key generating part 105 and generate a common key rnd (common key generation process, common key generation step). In this case, the common key generating part 105 may be omitted.

In S507, the common key encrypting part 22 of the user terminal 102 generates an encrypted common key E(rnd) by public-key encrypting the common key rnd with the public key pk in the public key certificate cert (common key encryption process, common key encryption step). E(x) represents data that is x as public-key encrypted. The encrypted common key E(rnd) is encrypted data only the PKG 104 having the secret key sk relating to the public key pk can decrypt.

In S508, the terminal transmitting/receiving part 23 of the user terminal 102 transmits the encrypted common key E(rnd) to the server 103.

### <Process of Server 103>

In S509, the server transmitting/receiving part 32 receives the encrypted common key E(rnd) from the user terminal 102.

In S510, the server transmitting/receiving part 32 transmits the encrypted common key E(rnd) received, and the user identifier UID to the PKG 104.

### <Process of PKG 104>

In S511, the PKG transmitting/receiving part 43 receives the encrypted common key E(rnd) and the user identifier UID from the server 103.

In S512, the common key acquiring part 45 of the PKG 104 acquires the common key rnd by decrypting the encrypted common key E(rnd) using the secret key sk stored in the PKG database 1041 (common key acquisition process, common key acquisition step).

In S513, the user secret key generating part 46 of the PKG 104 extracts the master secret key msk from the PKG database 1041.

In S514, using the master secret key msk, the user secret key generating part 46 generates a user secret key usk for the user identifier UID. Generation of the user secret key usk can be implemented by executing the key generating function part 212 of the functional encryption described with reference to Fig. 2.

In S515, the user secret key generating part 46 generates an encrypted user secret key E'(usk) by common-key encrypting the user secret key usk with the common key rnd acquired in S512 (information encryption process, information encryption step). E'(y) represents data that is y as common-key encrypted. The algorithm of the common key encryption is, for example, AES (Advanced Encryption Standard) or MISTY (registered trademark).

In S516, using the secret key sk, the user secret key generating part 46 generates a signature sig(E'(usk)) of the encrypted user secret key E'(usk). A signature sig(z) represents a digital signature for z.

Finally, in S517, the PKG transmitting/receiving part 43 transmits the encrypted user secret key E'(usk) and the signature sig(E'(usk)) to the server 103.

### <Process of Server 103>

In S518, the server transmitting/receiving part 32 receives the encrypted user secret key E'(usk) and the signature sig(E'(usk)) from the PKG 104.

In S519, the server 103 generates the terminal identifier TID.

In S520, the server storage part 33 stores the encrypted user secret key E'(usk) and the signature sig(E'(usk)) to the server database 1031 (encrypted information storage process, encrypted information storage step). The encrypted user secret key E'(usk) and signature sig(E'(usk)) as related to a set (UID, TID) of the user identifier UID and terminal identifier TID are stored to the server database 1031.

Finally, in S521, the server transmitting/receiving part 32 transmits the terminal identifier TID to the user terminal 102.

### <Process of User Terminal 102>

In S522, the terminal transmitting/receiving part 23 receives the terminal identifier TID from the server 103.

In S523, the terminal storage part 24 stores the terminal identifier TID and common key rnd to the terminal database 1021, and the process is ended (common key storage process, common key storage step).

The user setup process which relates the user 101 and the user terminal 102 to each other has now been described.

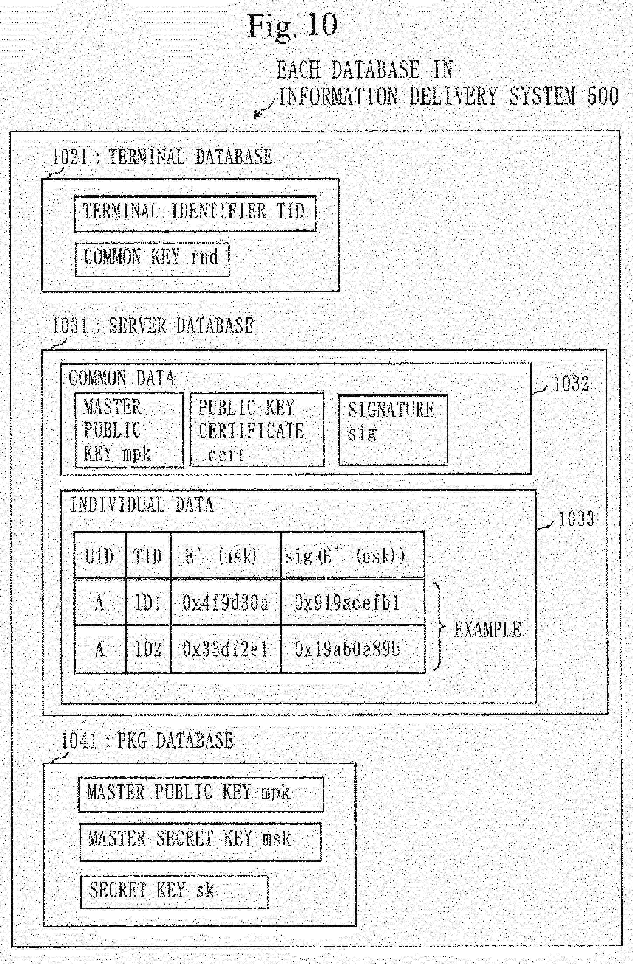

Fig. 10 is a diagram illustrating an example of configurations of data in the databases of the user terminal 102, server 103, and PKG 104, respectively, of the time the system setup process and the user setup process are ended.

With reference to Fig. 10, the data in the terminal database 1021, server database 1031, and PKG database 1041 of the time the system setup process and the user setup process are ended will be described.

As illustrated in Fig. 10, the terminal database 1021 of the user terminal 102 stores the terminal identifier TID and common key rnd.

In the server database 1031 of the server 103, the master public key mpk, the public key certificate cert, and the signature sig for the master public key are stored as the common data 1032. As the individual data 1033, the encrypted user secret key E'(usk) and its signature sig(E'(usk) are also stored for the set of the user identifier UID and terminal identifier TID.

In the PKG database 1041 of the PKG 104, the master public key mpk, the master secret key msk, and the secret key sk of the ordinary public key encryption are stored.

As is seen from Fig. 10, in the server database 1031, the user secret key usk is entirely encrypted using the common key rnd. Thus, the server administrator cannot see the contents of the user secret key usk. Because of the presence of the signature sig for the master public key mpk, the server administrator cannot counterfeit the master public key mpk at will.

In this manner, by executing the system setup process and the user set up process in the information delivery system 500 according to this embodiment, the user secret key and master public key of the functional encryption can be delivered to the user terminal 102 securely.

A specific procedure of a process (user secret key delivery process) of delivering the user secret key usk and of a process (master public key delivery process) of delivering the master public key mpk, when a delivery request (information delivery request) for information (user secret key, master secret key) is accepted in the information delivery system 500 from the user, will be described hereinafter.

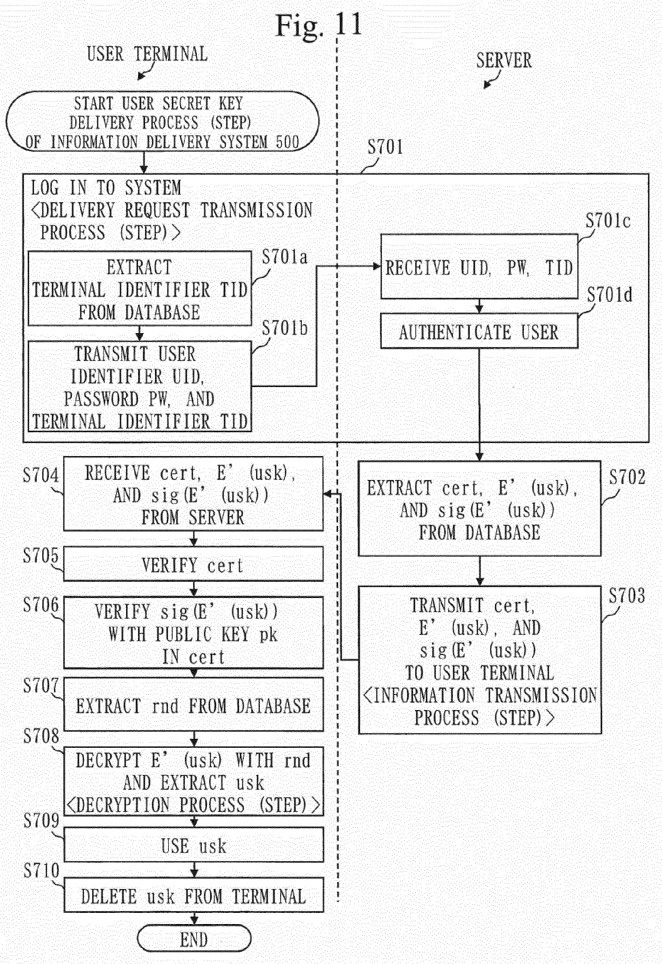

Fig. 11 is a flowchart illustrating the procedure of the process (user secret key delivery process) of delivering the user secret key usk of the functional encryption to the user terminal 102 according to this embodiment.

The procedure of delivering the user secret key usk of the functional encryption to the user terminal 102 will be described with reference to Fig. 11.

### <Delivery Request Transmission Process and Authentication Process>

In S701, first, the user 101 logs in to the information delivery system 500 by operating the user terminal 102 and transmits an information delivery request requesting delivery of the user secret key. More specifically, in S701a, the user terminal 102 extracts the terminal identifier TID from the terminal database 1021. In S701b, the user terminal 102 transmits the user identifier UID and password PW of the user 101 which are entered at the time of log-in, the terminal identifier TID, and the information delivery request to the server 103 (delivery request transmission process, delivery request transmission step). In S701c, the server transmitting/receiving part 32 receives the user identifier UID and password PW, the terminal identifier TID, and the information delivery request. In S701d, using the user identifier UID, password PW, and terminal identifier TID which are received, the authenticating part 31 of the server 103 authenticates the user 101. A secure communication path is desirably established between the user terminal 102 and the server 103.

### <Process of Server 103>

In S702, upon reception of the information delivery request, the server 103 extracts the public key certificate cert, encrypted user secret key E'(usk), and signature sig(E'(usk)) from the server database 1031. The server 103 takes the public key certificate cert out of the area of the common data 1032. The server 103 takes the encrypted user secret key E'(usk) and the signature sig(E'(usk)) out of the region of the individual data 1033.

In S703, the server transmitting/receiving part 32 transmits these data (public key certificate cert, encrypted user secret key E'(usk), and signature sig(E'(usk)) to the user terminal 102 (information transmission process, information transmission step).

### <Process of User Terminal 102>

In S704, the terminal transmitting/receiving part 23 receives the public key certificate cert, encrypted user secret key E'(usk), and signature sig(E'(usk)) from the server 103.

In S705, the terminal verifying part 26 verifies the public key certificate cert. If the verification fails, the process is ended. If the verification is successful, the process of the user terminal 102 advances to S706.

In S706, the terminal verifying part 26 verifies the signature sig(E'(usk)) with the public key pk in the public key certificate cert. If the verification fails, the process is ended. If the verification is successful, the process of the user terminal 102 advances to S707.

In S707, the user secret key acquiring part 25 extracts the common key rnd from the terminal database 1021.

In S708, the user secret key acquiring part 25 decrypts the encrypted user secret key E'(usk) with the common key rnd extracted, and extracts the user secret key usk (decryption process, decryption step). Now the user secret key usk is successfully delivered to the user terminal 102 in response to the information delivery request (user secret key delivery request) from the user terminal 102.

In S709, using the user secret key usk, the user terminal 102 executes the decryption process of the functional encryption (in the case of searchable encryption, a search query generation process).

Finally, in S710, the user terminal 102 deletes the user secret key usk from the terminal database 1021, and the process is ended.

The user secret key usk is deleted from the terminal in the last S710 in order to reduce the risk of leakage of the user secret key usk, being secret data, from the user terminal 102. S710 may be omitted.

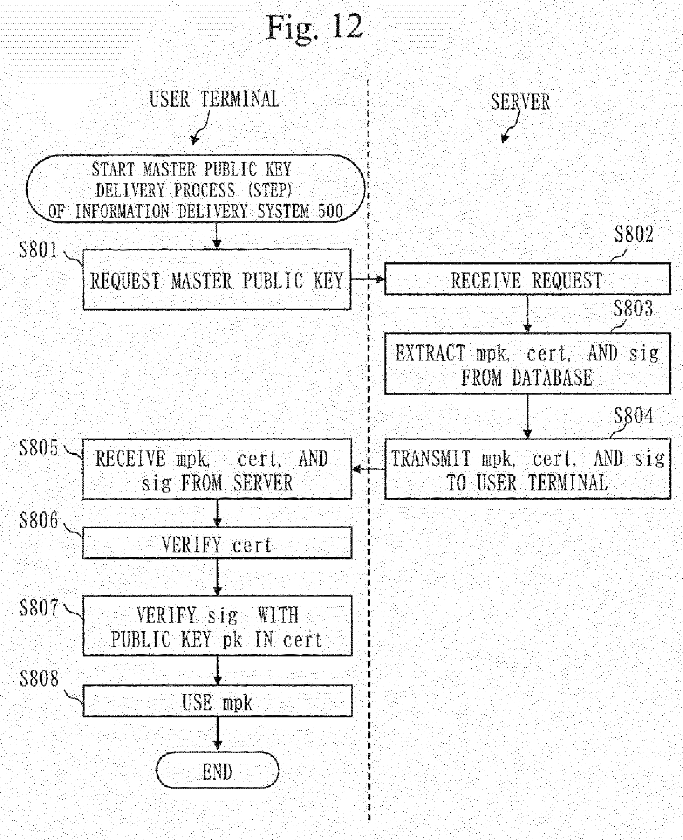

Fig. 12 is a flowchart illustrating a procedure of a process (master public key delivery process) of delivering a master public key of the functional encryption to the user terminal according to this embodiment.

The procedure of delivering the master public key mpk of the functional encryption to the user terminal 102 will be described with reference to Fig. 12.

### <Process of User Terminal 102>

In S801, upon accepting a master public key request requesting the master public key mpk, from the user 101, the terminal transmitting/receiving part 23 transmits the master public key request to the server 103. The user secret key delivery process of Fig. 11 includes a log-in process whereas the master public key delivery process does not. This is because different from the user secret key, the master public key is public information and does not need user authentication. However, a log-in process may be performed in the master public key delivery process as well.

### <Process of Server 103>

In S802, the server transmitting/receiving part 32 receives the master public key request from the user terminal 102.

In S803, the server 103 extracts the master public key mpk, public key certificate cert, and signature sig from the server database 1031.

In S804, the server transmitting/receiving part 32 transmits the master public key mpk, public key certificate cert, and signature sig which are extracted, to the user terminal 102.

### <Process of User Terminal 102>

In S805, the terminal transmitting/receiving part 23 receives the master public key mpk, public key certificate cert, and signature sig from the server 103.

In S806, the user terminal 102 verifies the public key certificate cert. If the verification fails, the process is ended. If the verification is successful, the process advances to S807.

In S807, the user terminal 102 verifies the signature sig with the public key pk in the public key certificate cert. If the verification fails, the process is ended. If the verification is successful, the process advances to S808.

In S808, using the master public key mpk, the user terminal 102 ends the process.

Now the procedures of delivering the user secret key and master public key of the functional encryption to the user terminal 102 have been described. These procedures can be repeated as needed.

It will now be confirmed that acquisition of the user secret key by the server 103 is prevented, and that spoofing of the PKG 104 by the server 103 to counterfeit the master public key and user secret key at will and to send the counterfeit keys to the user is prevented.

First, the server 103 being unable to acquire the user secret key will be described. As is obvious from the server database 1031 of Fig. 10, among the data dealt with by the server 103, what is necessary for obtaining the user secret key is E'(usk). However, E'(usk) has been common-key encrypted using the common key rnd unknown to the server 103. The common key rnd is data generated by the user terminal 102. If the common key rnd is sufficiently random, to obtain the user secret key usk from E'(usk) is extremely difficult.

It will now be described that the server 103 cannot spoof the PKG 104 to counterfeit the master public key and user secret key at will and to send the counterfeit keys to the user. For the counterfeiting to be possible, the digital signature sig for the master public key must be generated correctly. For this purpose, the public key certificate cert of the public key pk relating to the secret key sk must be generated correctly. Since cert is issued by the CA, however, it is not available except to the PKG. In this case, even if the server is able to counterfeit everything other than cert, it cannot counterfeit cert. Thus, verification of cert by the user terminal 102 will fail. This indicates that the server 103 cannot perform counterfeiting.

As described above, with the information delivery system 500 according to Embodiment 1, the user secret key can be delivered securely even when the user cannot access the PKG directly.

In cases where the PKG is not always on-line, that is, where the server cannot always access the PKG, the functions of the functional encryption and searchable encryption can also be provided to the user.

Since the user secret key is managed on the untrustworthy server, key management by the user becomes unnecessary.

Even in cases where the user cannot access the PKG directly, functional encryption and searchable encryption can be implemented securely.

### Embodiment 2.

In this embodiment, matters that are different from Embodiment 1 will mainly be described.

In this embodiment, description will be made on an information delivery system 500a that is partly different from the information delivery system 500 described in Embodiment 1.

Matters that have the same functions and operations as those of the constituent parts described in Embodiment 1 will be denoted by the same reference numerals as in Embodiment 1, and a description thereof will sometimes be omitted.

This embodiment discloses a scheme that disables a server 103 from acquiring the user secret key, more efficiently than in Embodiment 1 in terms of the number of steps and the number of pieces of data, on the premise that fraudulence such as key counterfeiting by the server 103 and theft of data on a memory is limited by some form or another such as the rules, ability, and intention of the server administrator.

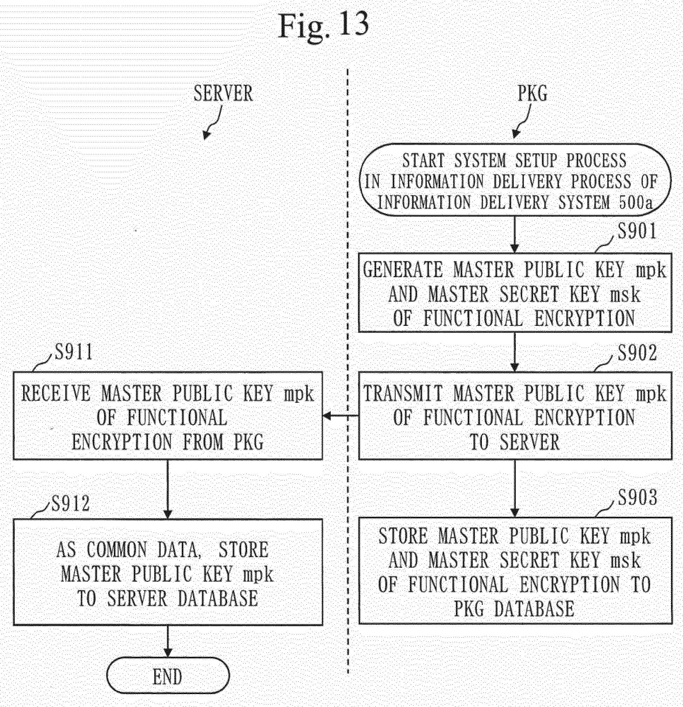

Fig. 13 is a flowchart illustrating a procedure of a system setup process in the information delivery system 500a according to this embodiment. Fig. 13 is equivalent to Fig. 8 described in Embodiment 1. The system setup process in the information delivery system 500a will be described with reference to Fig. 13. The outline of the system setup process is the same as that described in Embodiment 1.

First, in S901, a master key generating part 42 of a PKG 104 generates a master public key mpk and master secret key msk of the functional encryption. This is implemented by executing the setup function part 211 described with reference to Fig. 2. This process is the same as S403 of Fig. 8.

In S902, a PKG transmitting/receiving part 43 of the PKG 104 transmits the master public key mpk of the functional encryption to the server. A secure communication path is desirably established between the server and the PKG. More specifically, it is desirable that if the communication is made on-line, the communication path is encrypted by the SSL (Secure Socket Layer); if the communication is made off-line, data is stored in a medium, and the medium is delivered by a trustworthy transport operator, so that the data is transmitted securely. Finally in S903, a PKG storage part 44 of the PKG 104 stores the master public key mpk, and master secret key msk of the functional encryption to a PKG database 1041. This completes the process of the PKG 104.

The process of the server 103 will now be described.

In S911, a server transmitting/receiving part 32 of the server 103 receives the master public key mpk of the functional encryption from the PKG 104. In S912, a server storage part 33 of the server 103 stores the master public key mpk to a server database 1031 as common data 1032. This completes the process of the server 103.

The system setup process of the information delivery system 500a according to this embodiment has been described above.

In this manner, this embodiment does not include processes corresponding to S401, S402, S404, and S412 of Fig. 8. More specifically, the system setup process of the information delivery system 500a according to this embodiment does not use a public key certificate cert nor a signature sig of the master public key mpk. Hence, the block configuration of the PKG 104 is a configuration of the PKG 104 according to Embodiment 1 illustrated in Fig. 4, with the ordinary encryption key generating part 41 being omitted.

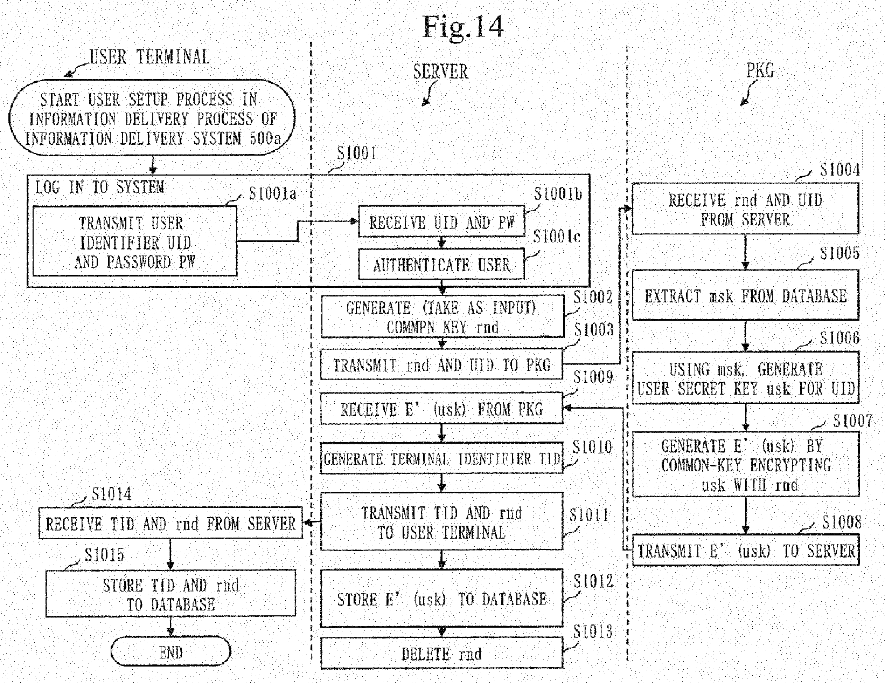

Fig. 14 is a flowchart illustrating a procedure of a user setup process in the information delivery system 500a according to this embodiment. Fig. 14 is equivalent to Fig. 9 described in Embodiment 1. The user setup process in the information delivery system 500a will be described with reference to Fig. 14. The outline of the user setup process is the same as that described in Embodiment 1.

The process of S100a through S1001c of Fig. 14 is the same as the processes of S501a through S501c of Fig. 9.

In S1002, the server 103 takes as input a common key rnd from a common key generating part 105. Alternatively, the server 103 may have a function (for example, server common key input part) of taking as input the common key rnd, or the server 103 itself may have a function (server common key generating part) of generating a common key rnd. If the server 103 generates a common key rnd by itself, the common key generating part 105 may be omitted.

In S1003, the server transmitting/receiving part 32 of the server 103 transmits the common key rnd and a user identifier UID to the PKG 104.

In S1004, the PKG transmitting/receiving part 43 receives the common key rnd and user identifier UID from the server 103.

In S1005, a user secret key generating part 46 of the PKG 104 extracts the master secret key msk from the PKG database 1041. In S1006, using the master secret key msk, the user secret key generating part 46 generates a user secret key usk for the user identifier UID (the same process as S513 through S514 of Fig. 9). This can be implemented by a key generating function part 212 of the functional encryption.

Subsequently, in S1007, the user secret key generating part 46 generates an encrypted user secret key E'(usk) by common-key encrypting the user secret key usk with the common key rnd (the same process as S515 of Fig. 9).

Finally, in S1008, the PKG transmitting/receiving part 43 transmits the encrypted user secret key E'(usk) to the server.

In S1009, the server transmitting/receiving part 32 receives the encrypted user secret key E'(usk) from the PKG 104.

In S1010, the server 103 generates a terminal identifier TID (the same process as S519 of Fig. 9).

In S1011, a server transmitting/receiving part 32 transmits the terminal identifier TID and common key rnd to a user terminal 102.

Then, in S1012, a server storage part 33 stores the encrypted user secret key E'(usk) to the server database 1031. In storing, the data is stored for a set (UID, TID) of the user identifier UID and terminal identifier TID.

Finally, in S1013, the server storage part 33 deletes the common key rnd from the server-side storage unit such as a memory.

In S1014, a terminal transmitting/receiving part 23 of the user terminal 102 receives the terminal identifier TID and common key rnd from the server 103.

In S1015, a terminal storage part 24 stores the terminal identifier TID and common key rnd to a terminal database 1021 (the same process as S523 of Fig. 9), and the process is ended.

This completes description on the user setup process in the information delivery system 500a.

The data configuration in the databases of the user terminal 102, server 103, and PKG 104 of the time the system setup process and the user setup process in the information delivery system 500a according to this embodiment are ended will be described.

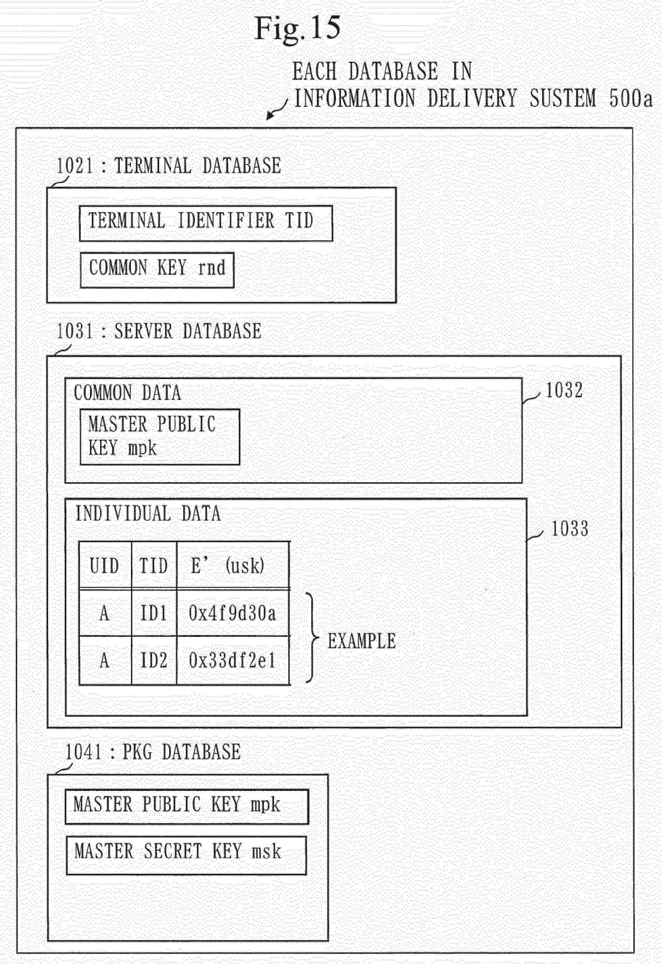

Fig. 15 is a diagram illustrating an example of configurations of data in the databases of the user terminal 102, server 103, and PKG 104, respectively, of the time the system setup process and the user setup process according to Embodiment 2 are ended. Fig. 15 is equivalent to Fig. 10 described in Embodiment 1.

Referring to Fig. 15, in the terminal database 1021, the terminal identifier TID and the common key rnd are stored. In the server database 1031, a master public key mpk is stored as the common data 1032. As individual data 1033, the encrypted user secret key E'(usk) is stored for the set of the user identifier UID and terminal identifier TID. The master public key mpk and master secret key msk are stored in the PKG database 1041.

As is seen from Fig. 15, in the server database 1031, the user secret key usk is entirely encrypted using the common key rnd. Thus, the server administrator cannot see the contents of the user secret key usk.

As has been described above, by executing the system setup process and user setup process according to this embodiment, the user secret key and master public key of the functional encryption can be securely delivered to the user terminal 102.

A specific procedure of the process (user secret key delivery process) of delivering the user secret key usk and of the process (master public key delivery process) of delivering the master public key mpk, when a delivery request (information delivery request) for information (user secret key, master public key) is accepted in the information delivery system 500a from the user, will now be described.

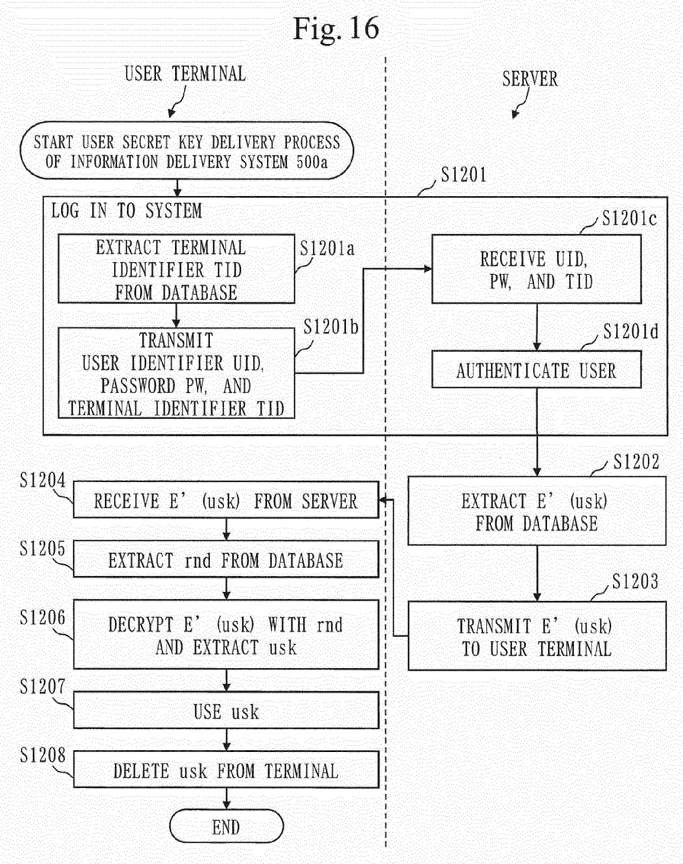

Fig. 16 is a flowchart illustrating the procedure of the process (user secret key delivery process) of delivering the user secret key usk of the functional encryption to the user terminal 102 according to this embodiment.

The procedure of delivering the user secret key usk of the functional encryption to the user terminal 102 will be described with reference to Fig. 16. Fig. 16 is equivalent to Fig. 11 described in Embodiment 1.

Referring to Fig. 16, first, in S1201, the user logs in to the information delivery system 500a by operating the user terminal 102.

The process of S1201a through S1201d is the same as the process of S701a through S701d described with reference to Fig 11.

Subsequently, in S1202, the server 103 extracts an encrypted user secret key E'(usk) from the area of the individual data 1033 of the server database 1031. Then, in S1203, the server transmitting/receiving part 32 transmits the encrypted user secret key E'(usk) to the user terminal 102.

In S1204, the terminal transmitting/receiving part 23 receives the encrypted user secret key E'(usk) from the server 103.

In S1205, a user secret key acquiring part 25 extracts a common key rnd from the terminal database 1021 (the same process as S707 of Fig. 11).

In S 1206, the user secret key acquiring part 25 decrypts the encrypted user secret key E'(usk) with the common key rnd extracted, and extracts the user secret key usk (the same process as S708 of Fig. 11).

After that, in S1207, the user terminal 102 executes a decryption process of the functional encryption (search query generation process in the case of searchable encryption) using the user secret key usk. Finally, in S1208, the user terminal 102 deletes the user secret key usk from the terminal, and the process is ended. The process of S1207 through S208 is the same as the process of S709 through S7010 described with reference to Fig. 11.

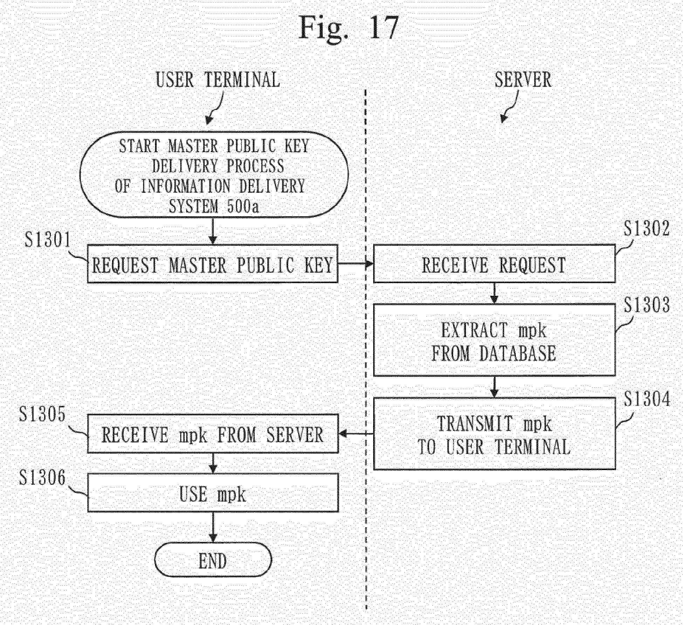

Fig. 17 is a flowchart illustrating a procedure of a process (master public key delivery process) of delivering a master public key of a functional encryption to the user terminal according to this embodiment. Fig. 17 is equivalent to Fig. 12 described in Embodiment 1.

The procedure of delivering the master public key mpk of the functional encryption to the user terminal 102 will be described with reference to Fig. 17.

In Fig. 17, the process of S1301 through S1302 is the same as the process of S801 through S802 described with reference to Fig. 12.

In S1303, the server 103 extracts the master public key mpk from the server database 1031.

In S1304, the server transmitting/receiving part 32 transmits the public key pk extracted, to the user terminal 102.

In S1305, the terminal transmitting/receiving part 23 receives the master public key mpk from the server 103.

In S1036, using the master public key mpk, the user terminal 102 ends the process (the same as the process of S808 of Fig. 12).

Now the procedures of delivering the user secret key and master public key of the functional encryption to the user terminal 102 according to this embodiment have been described. These procedures can be repeated as needed.

The information delivery system 500a according to this embodiment can disable the server 103 from acquiring the user secret key, more efficiently than in Embodiment 1 in terms of the number of steps and the number of pieces of data, on the premise that fraudulence such as key counterfeiting by the server 103 and theft of data on the memory is limited by some form or another such as the rules, ability, and intention of the server administrator. The reason for this will be described below.

Concerning the server 103 being unable to acquire the user secret key, as is obvious from the server database 1031 of Fig. 15, among the data dealt with by the server 103, what is necessary for obtaining the user secret key is the encrypted user secret key E'(usk) which has been common-key encrypted using the common key rnd generated (taken as input) by the server 103. The common key rnd is deleted in S1013 of Fig. 14 and will not be stored in the server database 1031. Accordingly, unless fraudulence such as theft of data on the memory is conducted, the server administrator cannot obtain the common key rnd. Thus, the server administrator cannot obtain the user secret key, either.

Regarding the efficiency, first, as for the number of steps, each process is realized with a fewer steps than in Embodiment 1, since the steps of signature and verification for the data as well as the steps of generating the public key and secret key which are necessary for the signature and verification are omitted in the processes. As for the number of pieces of data, a fewer pieces of data need be managed than in Embodiment 1, as is obvious from comparison of Fig. 10 with Fig. 15. This indicates that the information delivery system 500a according to this embodiment is more efficient as compared to Embodiment 1.

### Embodiment 3.

In this embodiment, matters that are different from Embodiments 1 and 2 will mainly be described.

In this embodiment, description will be made on an information delivery system 500b that is partly different from the information delivery systems 500 and 500a described in Embodiments 1 and 2, respectively.

Matters that have the same functions and operations as those of the constituent parts described in Embodiments 1 and 2 will be denoted by the same reference numerals as in Embodiments 1 and 2, and a description thereof will sometimes be omitted.

This embodiment discloses a scheme that prevents acquisition of the user secret key by a server 103, more efficiently by using the user password.

As the premise of this embodiment, it is necessary to understand that in a generally used system, when authentication is carried out using the password, authentication is executed by comparing the hash values of passwords, instead of comparing the passwords themselves. Namely, the hash value of the password is stored on the server, not the password itself. A password entered by the user at the time of authentication is temporarily replaced on the server by a hash value. This hash value is compared with the hash value stored in the server to perform authentication. The reason for this is as follows. If the password itself is stored, once the password should leak, a potential danger of being spoofed easily could arise. This scheme prevents such fraudulence.

In this embodiment as well, first, a system setup process is executed. The system setup process is executed when a system is started anew, as in setting up a system for the first time or replacing an existing system totally. The system setup process in the information delivery system 500a according to this embodiment is the same as the process illustrated in Fig. 13 and described in Embodiment 2, and a description thereof will accordingly be omitted.

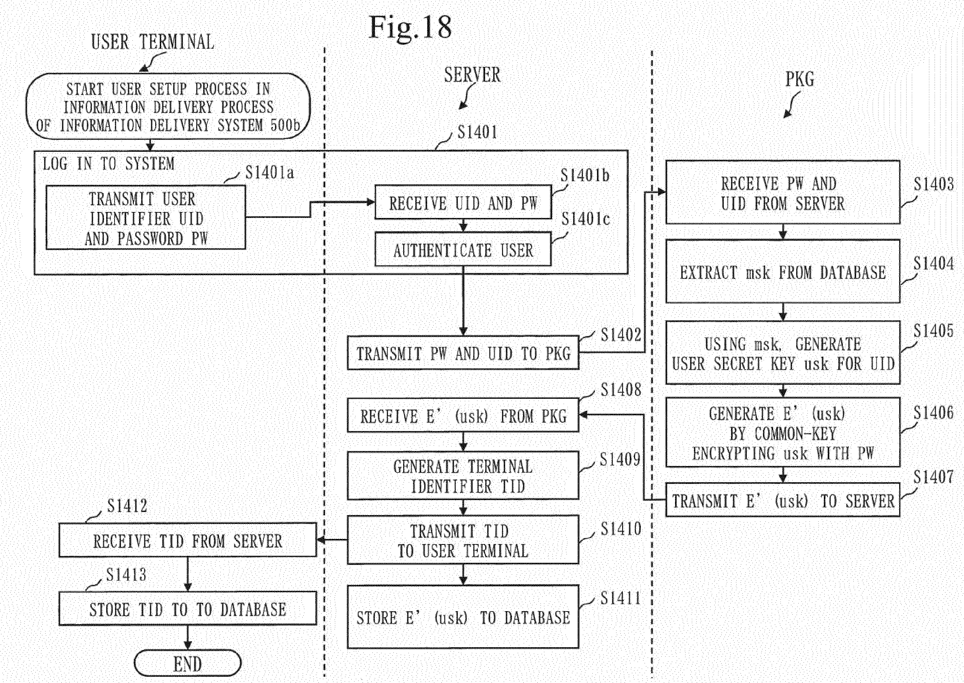

Fig. 18 is a flowchart illustrating a procedure of a user setup process in the information delivery system 500b according to this embodiment. Fig. 18 is equivalent to Fig. 14 described in Embodiment 1. The user setup process of the information delivery system 500b according to this embodiment will now be described. The outline of the user setup process is the same as that described in Embodiment 1.

First, in S1401, the user logs in to the system by operating a user terminal 102. The process of S1041a through S1401c of Fig. 18 is the same as the process of S1001a through S1001c of Fig. 14.

Subsequently, in S1042, a server transmitting/receiving part 32 transmits a password PW and a user identifier UID which are entered, to a PKG 104.

In S1043, a PKG transmitting/receiving part 43 receives the password PW and user identifier UID from the server 103.

In S1404, a user secret key generating part 46 of the PKG 104 extracts a master secret key msk from a PKG database 1041. In S1405, using the master secret key msk, a user secret key generating part 46 generates a user secret key usk for the user identifier UID (the same process as S1005 through S1006 of Fig. 14). This can be implemented by the key generating function part 212 of the functional encryption.

Subsequently, in S1406, the user secret key generating part 46 generates an encrypted user secret key E'(usk) by encrypting the user secret key usk with the password PW.

Finally, in S1407, the PKG transmitting/receiving part 43 transmits the encrypted user secret key E'(usk) to the server (the same process as S1008 of Fig. 14).

The server 103, upon reception of the encrypted user secret key E'(usk) from the PKG 104 in S1408, generates a terminal identifier TID in S1409. The process of S1408 through S1409 is the same as the process of S1009 through S1010 of Fig. 14.

In S1410, the server transmitting/receiving part 32 transmits the terminal identifier TID to the user terminal 102.

Finally, in S 1411, the server storage part stores the encrypted user secret key E'(usk) to the database (the same process as S1012 of Fig. 14). When storing, data such as the encrypted user secret key E'(usk) is stored for a set (UID, TID) of the user identifier UID and the terminal identifier TID. This is the same as in Embodiment 2.

In S1412, a terminal transmitting/receiving part 23 receives the terminal identifier TID from the server 103.

In S1413, a terminal storage part 24 stores the terminal identifier TID to a terminal database 1021, and the process is ended.

The user setup process in the information delivery system 500b according to this embodiment has now been described.

The data configuration in the databases of the user terminal 102, server 103, and PKG 104 of the time the system setup process and the user setup process in the information delivery system 500b according to this embodiment are ended will be described.

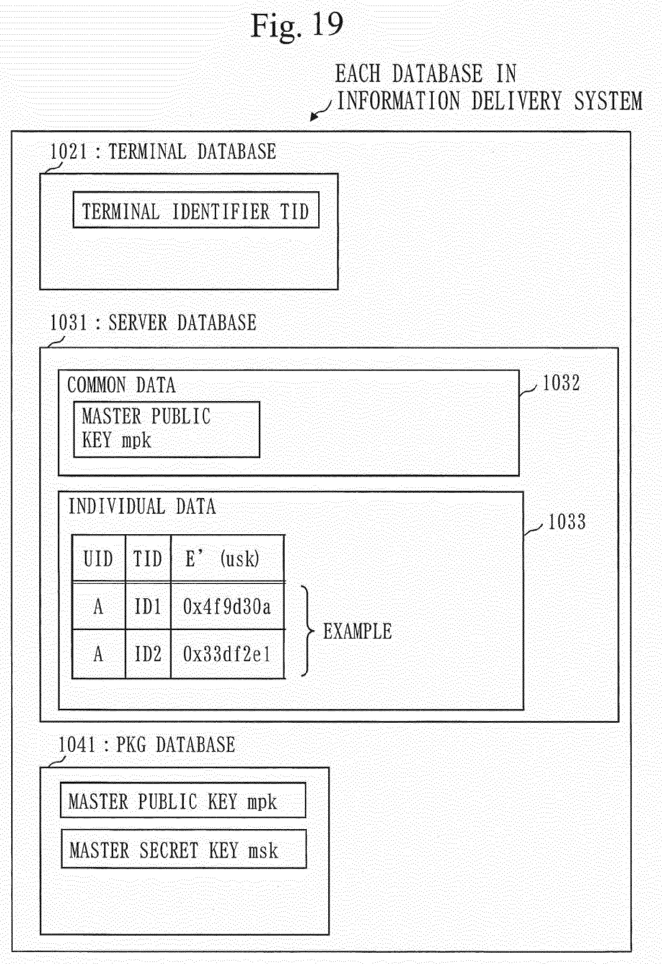

Fig. 19 is a diagram illustrating an example of configurations of data in the databases of the user terminal 102, server 103, and PKG 104, respectively, of the time the system setup process and the user setup process according to this embodiment are ended. Fig. 19 is equivalent to Fig. 15 described in Embodiment 2.

Referring to Fig. 19, in the terminal database 1021 of the user terminal 102, the terminal identifier TID is stored. In a server database 1031, a master public key mpk is stored as common data 1032. As individual data 1033, the encrypted user secret key E'(usk) is stored for the set of the user identifier UID and terminal identifier TID. The encrypted user secret key E'(usk) has been encrypted by using the password PW. In a PKG database 1041, the master public key mpk and master secret key msk are stored.

As is seen from Fig. 19, in the server database 1031, the user secret key usk is entirely encrypted using the password PW relating to the user identifier UID. Thus, the server administrator cannot see the contents of the user secret key usk.

As has been described above, by executing the system setup process and user setup process according to this embodiment, the user secret key and master public key of the functional encryption can be securely delivered to the user terminal 102.

A specific procedure of the process (user secret key delivery process) of delivering the user secret key usk and of the process (master public key delivery process) of delivering the master public key mpk, when a delivery request (information delivery request) for information (user secret key, master public key) is accepted in the information delivery system 500b from the user, will now be described.

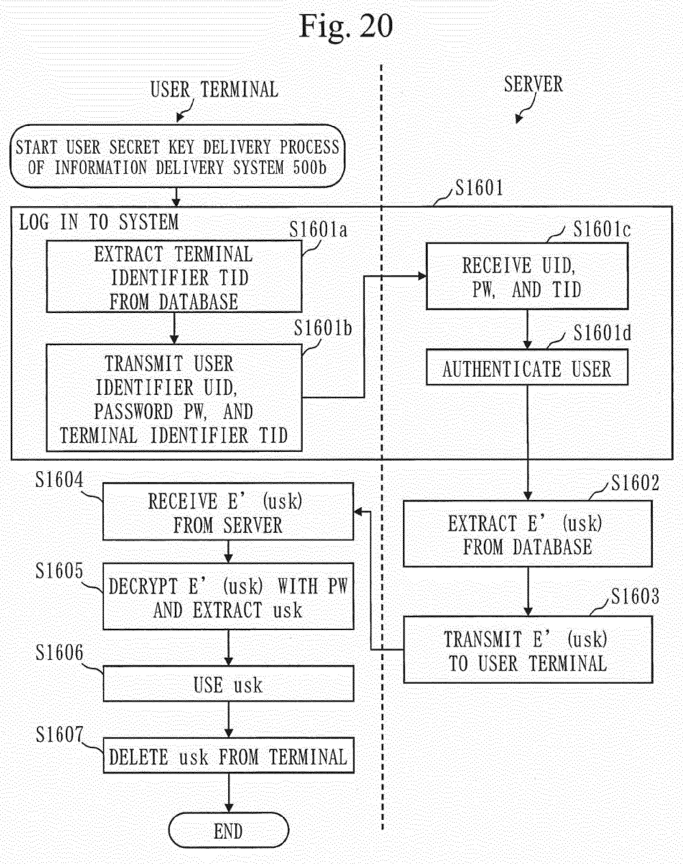

Fig. 20 is a flowchart illustrating the procedure of the process (user secret key delivery process) of delivering a user secret key usk of the functional encryption to the user terminal according to this embodiment.

The procedure of delivering the user secret key usk of the functional encryption to the user terminal 102 will be described with reference to Fig. 20. Fig. 20 is equivalent to Fig. 16 described in Embodiment 2.

Referring to Fig. 20, first, in S1601, the user logs in to the information delivery system 500b by operating the user terminal 102.

The process of S1601a through S1601d is the same as the process of S1201a through S1201d described with reference to Fig 16.

Subsequently, in S 1602, the server 103 extracts the encrypted user secret key E'(usk) from the area of the individual data 1033 of the server database 1031. Then, in S1603, the server 103 transmits the encrypted user secret key E'(usk) to the user terminal 102. In S1604, the user terminal 102 receives the encrypted user secret key E'(usk) from the server. The process of S1602 through S1604 is the same as the process of S 1202 through S1204 described with reference to Fig. 16.

In S1605, a user secret key acquiring part 25 of the user terminal 102 decrypts the encrypted user secret key E'(usk) with the password PW and extracts the user secret key usk. As the password PW, the data encrypted at the time of log-in may be used unchanged, or the password PW may be entered by a user 101 again.

Now the user secret key usk is successfully delivered to the user terminal 102. Thereafter, in S1606, a decryption process of the functional encryption (search query generation process in the case of a searchable encryption) is executed using the user secret key usk. Finally, in S1607, usk is deleted from the terminal, and the process is ended. The process of S1606 through S1607 is the same as the process of S1207 through S1208 described with reference to Fig. 16.

Regarding the procedure (master public key delivery process) of delivering the master public key of the functional encryption to the user terminal 102, this procedure is the same as the procedure of Fig. 17 described in Embodiment 2.

The procedures of delivering the user secret key and master public key of the functional encryption to the user terminal 102 in the information delivery system 500b according to this embodiment have been described above. These procedures can be repeated as needed.

In the user setup process and the user secret key delivery procedure according to Embodiment 3, the configuration is such that the server 103 sends the password PW of the user to the PKG 104 without any change. Moreover, if it is necessary to prevent the PKG administrator from spoofing the user 101, a configuration may be adopted in which the hash value of the password PW is calculated using a hash function different from the password hash employed for the purpose of system password authentication, and the calculated value may be used in place of the password PW. This can prevent the spoofing mentioned above.

Embodiment 3 has been described above. Finally, the effect of Embodiment 3 will be confirmed that acquisition of the user secret key by the server 103 can be prevented, more efficiently than in Embodiment 2 by using the user password PW of the user 101.

First, concerning the server 103 being unable to acquire the user secret key, as is obvious from the server database 1031 of Fig. 19, among the data dealt with by the server 103, what is necessary for obtaining the user secret key is the encrypted user secret key E'(usk). The encrypted user secret key E'(usk) has been common-key encrypted by using the password PW of the user 101 as the common key. Although the password PW temporarily appears on the server 103 in authentication, it will not be stored in the server database 1031. Accordingly, unless fraudulence such as theft of data on the memory is conducted, the server administrator cannot obtain the password PW. Thus, the server administrator cannot obtain the user secret key, either.

Regarding the efficiency, first, as for the number of steps, this embodiment is realized with a fewer steps than in Embodiment 2, since the steps of generating a common key rnd are omitted. As for the number of pieces of data, a fewer pieces of data need be managed in the user terminal 102 than in Embodiment 2, as is obvious from comparison of Fig. 15 with Fig. 19. This indicates higher efficiency over Embodiment 2.

The present present invention has been exemplified by Embodiment 1 to Embodiment 3. Note that the present invention is not limited to these embodiments but various other embodiments are possible. For example, in the present invention, the number of servers that are untrustworthy as the system configuration is one (1) and the number of PKGs is one (1). Alternatively, a plurality of untrustworthy servers and a plurality ofPKGs may exist. In this case, a mechanism may be introduced that can identify the connecting destinations of the user terminal, servers, and PKGs correctly and can manage data to be stored, separately for individual connecting destinations. Then, the same process as that described in the above embodiments can be carried out.

According to the present invention, regarding the data generated by the PKG and utilized by the user terminal, the public information is the master public key of the functional encryption, and the secret information is the user secret key of the functional encryption. However, it is obvious that the master public key and user secret key are not limited to those of the functional encryption. As has been described earlier, a key of the searchable encryption may be employed, and a public key and secret key of ordinary public key encryption may be employed. Also, a common key of a common key encryption may be employed. In this case, no public information exists particularly. Alternatively, more generally, the present invention can be used as a system that delivers public information and secret information. In either case, the public information and secret information can be delivered to the user terminal with the same process as that described in each embodiment.

In fine, the present invention provides a system that delivers information from the generator of the information to the user via an untrustworthy relay and, more particularly, a system that stores information to an untrustworthy relay temporarily and then delivers the information to the user.

In the above description of Embodiments 1 to 3, the information delivery system includes the user terminal, the server, and the PKG; the user terminal is constituted of the "terminal transmitting/receiving part", "terminal storage part", "user secret key acquiring part", and "terminal verifying part"; the server is constituted of the "authenticating part", "server transmitting/receiving part", "server storage part", and "server verifying part"; and the PKG is constituted of the "ordinary encryption key generating part", "master key generating part", "PKG transmitting/receiving part", "PKG storage part", "common key acquiring part", and "user secret key generating part". However, the information delivery system is not limited to this configuration. For example, in the user terminal, the "user secret key acquiring part" and the "terminal verifying part" may be implemented by a single function block. In the PKG, the "ordinary encryption key generating part" and the "master key generating part" may be implemented by a single function block. Alternatively, the information delivery system may be constituted of any other combination of these function blocks.

The above embodiments are essentially preferable examples and are not intended to limit the present invention, the applied product of the present invention, and the scope of usage of the present invention. Various changes may be made in the above embodiments as needed. Of the above embodiments, two or more embodiments may be combined and practiced. Alternatively, of the above embodiments, one embodiment may be practiced partially. Alternatively, of the above embodiments, two or more embodiments may be combined partially and practiced.

### Reference Signs List

21: common key input part; 22: common key encrypting part; 23: terminal transmitting/receiving part; 24: terminal storage part; 25: user secret key acquiring part; 26: terminal verifying part; 31: authenticating part; 32: server transmitting/receiving part; 33: server storage part; 34: server verifying part; 41: ordinary encryption key generating part; 42: master key generating part; 43: PKG transmitting/receiving part; 44: PKG storage part; 45: common key acquiring part; 46: user secret key generating part; 101: user; 102: user terminal; 103: server; 104: PKG; 105: common key generating part; 200: functional encryption scheme; 201: security parameter; 202: master public key; 203: master secret key; 204: attribute; 205: user secret key; 206: confidential data; 207: predicate; 208: encrypted data; 211: setup function part; 212: key generating function part; 213: encrypting function part; 214: decrypting function part; 301: search keyword; 302: encrypted query; 303: matching result; 311: search query generating function part; 312: concealed matching function part; 500: information delivery system; 901: computation unit; 902: external storage unit; 903: main storage unit; 904: communication unit; 905: input/output unit; 1021: terminal database; 1031: server database; 1032: common data; 1033: individual data; 1041: PKG database

## Claims

1. An information delivery system comprising: an information generating device to generate information; a server device connected to the information generating device; and a terminal device connected to the server device and to communicate with the information generating device via the server device, the information delivery system comprising
a common key generating part to generate a common key,
wherein the terminal device includes:
a terminal-side storage unit; and
a common key storage part to take as input the common key generated by the common key generating part, and to store the common key inputted, to the terminal-side storage unit,
wherein the information generating device includes:
an information encrypting part to take as input the common key generated by the common key generating part, to encrypt the information by a processing device using the common key inputted, and to transmit the information encrypted, to the server device as encrypted information, and
wherein the server device includes:
a server-side storage unit; and
an encrypted information storage part to receive the encrypted information from the information encrypting part of the information generating device, and to store the encrypted information received, to the server-side storage unit.

2. The information delivery system according to claim 1,
wherein the terminal device includes
a delivery request transmitting part to transmit an information delivery request requesting delivery of the information, to the server device,
wherein the server device includes
an information transmitting part to transmit, upon reception of the information delivery request from the delivery request transmitting part, the encrypted information stored in the server-side storage unit by the encrypted information storage part, to the terminal device, and
wherein the terminal device includes
a decrypting part to receive the encrypted information transmitted from the information transmitting part of the server device, and to decrypt the encrypted information received, using the common key stored in the terminal-side storage unit, thereby acquiring the information.

3. The information delivery system according to claim 1 or 2,
wherein the information generating device includes:
a key generating part to generate a public key and a secret key relating to the public key; and
a key transmitting part to transmit the public key generated by the key generating part to the server device,
wherein the server device includes
a server-side transmitting part to transmit the public key transmitted from the key transmitting part of the key information generating device, to the terminal device,
wherein the terminal device includes
a common key encrypting part to encrypt the common key stored in the terminal-side storage unit by the common key storage part, using the public key transmitted from the server-side transmitting part, and to transmit the common key encrypted, to the server device as the encrypted common key,
wherein the server-side transmitting part of the server device
transmits the encrypted common key transmitted from the common key encrypting part of the terminal device, to the information generating device,
wherein the information generating device
includes a common key acquiring part to acquire the common key by decrypting the encrypted common key transmitted from the server-side transmitting part, using the secret key generated by the key generating part, and to output the common key acquired, to the information encrypting part, and
wherein the information encrypting part of the information generating device
takes as input the common key acquired by the common key acquiring part, and encrypts the information using the common key inputted.

4. The information delivery system according to claim 2,
wherein the server device includes:
an authenticating part to take as input a user identifier and a password of a user who uses the terminal device from the terminal device, and to authenticate the user using the user identifier and the password which are inputted; and
a server-side transmitting part to take as input the password from the authenticating part, when the user is authenticated by the authenticating part, and to transmit the password inputted, to the information generating device,
wherein the information encrypting part of the information generating device
takes as input the password transmitted from the server-side transmitting part, as the common key, encrypts the information using the common key inputted, and transmits the information encrypted, to the server device as encrypted information, and
wherein the decrypting part of the terminal device
receives the encrypted information transmitted from the information encrypting part of the server device, and decrypts the encrypted information received, using the password, thereby acquiring the information.

5. A server device connected to an information generating device which generates information and to a terminal device which includes a terminal-side storage unit, the server device comprising:
a server-side storage unit;
an encrypted information storage part to receive encrypted information from the information generating device, and to store the encrypted information received, to the server-side storage unit, wherein the information generating device takes as input a common key and encrypts the information using the common key inputted, the information generating device transmitting the information encrypted, as the encrypted information; and
an information transmitting part to transmit, upon reception of an information delivery request requesting delivery of the information, from the terminal device, the encrypted information stored in the server-side storage unit by the encrypted information storage part, to the terminal device which stores the common key in the terminal-side storage unit.

6. An information generating device which generates information, the information generating device being connected to a server device and communicating with a terminal device connected to the server device, via the server device, the information generating device comprising:
a key generating part to generate a public key and a secret key relating to the public key;
a key transmitting part to transmit the public key generated by the key generating part, to the server device;
a common key acquiring part to receive an encrypted common key from the terminal device including a terminal-side storage unit which stores a common key, via the server device, and to decrypt the encrypted common key received, using the secret key generated by the key generating part, thereby acquiring the common key, the terminal device receiving the public key transmitted from the key transmitting part, via the server device, encrypting the common key using the public key received, and transmitting the common key encrypted, as the encrypted common key; and
an information encrypting part to take as input the common key acquired by the common key acquiring part, to encrypt the information using the common key inputted, and to transmit the information encrypted, to the server device as encrypted information.

7. A terminal device which is connected to a server device including a server-side storage unit, and communicates with an information generating device that generates information, via the server device, the terminal device comprising:
a terminal-side storage unit to store a common key;
a common key encrypting part to receive a public key, via the server device, from an information generating device which generates the public key and a secret key relating to the public key; to encrypt the common key stored in the terminal-side storage unit using the public key received; and to transmit the common key encrypted, as an encrypted common key;
a delivery request transmitting part to transmit an information delivery request requesting delivery of the information, to the server device which receives encrypted information from the information generating device and stores the encrypted information received, to the server-side storage unit, wherein the information generating device receives the encrypted common key via the server device and decrypts the encrypted common key received, using the secret key, thereby acquiring the common key, the information generating device encrypting the information using the common key acquired, and transmitting the information encrypted, as the encrypted information; and
a decrypting part to receive the encrypted information transmitted from the server device that has received the information delivery request, and to decrypt the encrypted information received, using the common key stored in the terminal-side storage unit, thereby acquiring the information.

8. An information delivery method for an information delivery system comprising: an information generating device to generate information; a server device connected to the information generating device; and a terminal device connected to the server device and to communicate with the information generating device via the server device, the information delivery method comprising:
a common key generating step of generating a common key, by a common key generating part;
a common key storage step of taking as input the common key generated by the common key generating step, and storing the common key inputted, to the terminal-side storage unit, by the terminal device including a terminal-side storage unit;
an information encrypting step of taking as input the common key generated by the common key generating step, encrypting the information using the common key inputted, and transmitting the information encrypted, to the server device as encrypted information, by the information generating device; and
an encrypted information storage step of receiving the encrypted information transmitted by the information encrypting step and storing the encrypted information received, to the server-side storage unit, by the server device including a server-side storage unit.

9. A program for a server device comprising a server-side storage unit and connected to an information generating device which generates information and to a terminal device which includes a terminal-side storage unit, the program causing the server device, being a computer, to execute:
an encrypted information storage process of receiving encrypted information from the information generating device, and storing the encrypted information received, to the server-side storage unit, by an encrypted information storage part, wherein the information generating device takes as input a common key and encrypts the information using the common key inputted, the information generating device transmitting the information encrypted, as the encrypted information; and
an information transmitting process of transmitting, upon reception of an information delivery request requesting delivery of the information, from the terminal device, the encrypted information stored in the server-side storage unit by the encrypted information storage process, to the terminal device which stores the common key in the terminal-side storage unit, by an information transmitting part.

10. A program for an information generating device which generates information, the information generating device being connected to a server device and communicating with a terminal device connected to the server device, via the server device, the program causing the information generating device, being a computer, to execute:
a key generating process of generating a public key and a secret key relating to the public key, by a key generating part;
a key transmitting process of transmitting the public key generated by the key generating process, to the server device, by a key transmitting part;
a common key acquiring process of receiving an encrypted common key from the terminal device including a terminal-side storage unit which stores a common key, via the server device, and decrypting the encrypted common key received, using the secret key generated by the key generating process, thereby acquiring the common key, by a common key acquiring part, the terminal device receiving the public key transmitted by the key transmitting process, via the server device, encrypting the common key using the public key received, and transmitting the common key encrypted, as the encrypted common key; and
an information encrypting process of taking as input the common key acquired by the common key acquiring process, encrypting the information using the common key inputted, and transmitting the information encrypted, to the server device as encrypted information, by an information encrypting part.

11. A program for a terminal device which comprises a terminal-side storage unit to store a common key, is connected to a server device including a server-side storage unit, and communicates with an information generating device that generates information, via the server device, the program causing the terminal device, being a computer, to execute:
a common key encrypting process of receiving, via the server device, a public key from the information generating device which generates the public key and a secret key relating to the public key; encrypting the common key stored in the terminal-side storage unit using the public key received; and transmitting the common key encrypted, as an encrypted common key, by a common key encrypting part;
a delivery request transmitting process of transmitting an information delivery request requesting delivery of the information, to the server device which receives encrypted information from the information generating device and stores the encrypted information received, to the server-side storage unit, by a delivery request transmitting part, wherein the information generating device receives the encrypted common key via the server device and decrypts the encrypted common key received, using the secret key, thereby acquiring the common key, the information generating device encrypting the information using the common key acquired, and transmitting the information encrypted, as the encrypted information; and
a decrypting process of receiving the encrypted information transmitted from the server device that has received the information delivery request, and decrypting the encrypted information received, using the common key stored in the terminal-side storage unit, thereby acquiring the information, by a decrypting part.
